# EUROPÄISCHE PATENTSCHRIFT

(11) **EP 0 724 141 B1**
(45) Veröffentlichungstag und Bekanntmachung des Hinweises auf die Patenterteilung: **09.02.2000**
(21) Anmeldenummer: 95250313.4
(22) Anmeldetag: 22.12.1995
(51) Int. Cl.: G07B 17/00, G01G 19/00

(54) **Verfahren zur Dateneingabe in eine Waage**
Method for data input for a weighing device
Méthode d'entrées de données pour une balance

(30) Priorität: 23.12.1994 DE 4447404
(43) Veröffentlichungstag der Anmeldung: 31.07.1996
(73) Patentinhaber: Francotyp-Postalia Aktiengesellschaft & Co., 16547 Birkenwerder (DE)
(72) Erfinder: Märkl, Katrin, D-13347 Berlin (DE); Günther, Stephan, D-13465 Berlin (DE); Freytag, Claus, D-10587 Berlin (DE); Kubatzki, Ralf, D-10405 Berlin (DE); Thiel, Wolfgang Dr., D-13503 Berlin (DE)

(56) Entgegenhaltungen:
- EP-A- 0 328 059
- EP-A- 0 566 225
- EP-A- 0 619 565
- US-A- 4 122 532

## Beschreibung

Die Erfindung betrifft ein Verfahren zur Dateneingabe in eine Waage und eine Anordnung zum Durchführen des Verfahrens gemäß der im Oberbegriff der Ansprüche angegebenen Art.

Es ist bereits bekannt, eine Waage mit einer Frankiermaschine über eine serielle Schnittstelle zu verbinden, um Gewichtsinformationen oder Portowerte in die Frankiermaschine einzugeben. Die Frankiermaschine wird zum Frankieren von Postgut eingesetzt und kann mit einer Steuereinheit, einem Speichermittel, einem Eingabemittel, einem MODEM und mit einer Chipkarten-Schreib/Leseeinheit oder anderen Empfangsmitteln, einem Ein/Ausgabe-Steuermittel, einem Anzeigemittel und einem Drucker ausgerüstet sein.

Aus der DE 32 04 906 A1 ist eine einen Portorechner enthaltende Waage bekannt. Über eine separate externe Peripheriegeräte-Schnittstelle werden die durch die Waage errechneten Portowerte in die Frankiermaschine eingegeben. Bei Posttarifänderungen ist es üblich, die neuen Portogebührenwerte mittels eines nichtflüchtigen Speicherbausteins durch den Service beim Kunden zu installieren. Neben dem erheblichen Serviceaufwand bedeutet dies vor allem eine durch das in der Praxis nachträgliche Auswechseln nicht rechtzeitig wirksam werdende Portogebührentabelle.

Es wurde bereits aus der US 45 06 330 eine abnehmbare Leiterplatte mit DIP-Schaltern am Adresseneingang eines PROM's für die selektive Adressierung eines Speichersektors bekannnt. Postunterschiede innerhalb besonderer Serviceklassen lassen sich ökonomisch berechnen, durch Berechnung mittels Postleitzahl-Umrechnungstabellen, die einen reduzierten Speicherbedarf haben. Zwar wird der Speicherbedarf für die Kundendatenspeicherung von Postzonentabellen dabei wesentlich reduziert, jedoch müssen die DIP-Schalter manuell eingestellt werden.

Ein ähnlicher auswechselbarer Speicher ist bereits in US-PS 36 35 297 für ein Postabfertigungsgerät mit automatischer Gebührenwertberechnung vorgeschlagen worden. Diese Speicher liegen an einer parallelen BUS-Schnittstelle und enthalten dabei eine Portogebührentabelle, aus der bei Eingabe des Gewichtes eines Postversandstücks ggf. weiteren Versandangaben der Portobetrag berechnet wird. Nachteilig ist der Aufwand, der dadurch entsteht, wenn aufgrund des Inkrafttretens eines neuen Tarifs, die Gebührenwerte in der Tabelle des Speichers geändert werden müssen. Es ist nicht sichergestellt, daß der Gerätebenutzer den Austausch des Speichers zur Aktualisierung rechtzeitig vornehmen läßt.

In DE 28 03 982 C2 wurde zur bei Inkrafttreten eines neuen Tarifs erforderlichen Aktualisierung der in Postabfertigungsmaschinen gespeicherten Portogebührentabelle eine Fernwertvorgabe vorgeschlagen. Von einer zentralen Datenstation wird der neue Tarif fernbetätigt auf mehrere Postabfertigungsmaschinen gleichzeitig übertragen. Jede Postabfertigungsmaschine enthält eine Empfangseinrichtung mit MODEM und eine Speicheransteuerschaltung, durch die - ähnlich wie sonst von einem Systemdatenprozessor - die entsprechenden Speicherplätze durch ein übertragenes Adreßwort adressiert und durch ein übertragenes zugeordnetes Datenwort überschrieben werden. Die Initiative geht von der Datenzentrale aus, wenn die Postbehörden die Posttarife, Bezeichnungen der Bestimmungszonen oder die Postgebührenklassifikation ändern. Das Überschreiben wird von der Datenzentrale mittels Signalrückleitung überwacht. Eine Aktualisierung mit dem neuen Tarif setzt jedoch voraus, daß die Frankiermaschinen zu diesen Zeitpunkten eingeschaltet und von der Datenzentrale ständig ansprechbar sind.

Die aus der US 41 38 735 bekannte automatische Portowaage besitzt ein Rate-PROM, das über Funk oder Telefon mit einer aktuellen Portogebührentabelle ausgestattet werden kann. Durch eine einzelne Adressierung jeder Frankiermaschine mittels einer Erkennungsadresse ergibt sich die Möglichkeit für eine nichtgleichzeitige Übertragung einer Portogebührentabelle. Diese Lösung erfordert eine Kontrolle der Sequenz der einzelnen Nachrichten, um eine Kontrolle über den erreichten jeweiligen Aktualisierungsstand auszuüben. Zusätzlich zur Erkennungsadresse und zum revidierten Informationsabschnitt mit der Portogebührentabelle muß deshalb ein Revisionsdatenabschnitt ausgesendet werden. Letzterer dient als Ordnungszahl für die gerade ausgesendete Version des Informationsabschnittes. In der automatischen Portowaage wird bei Übereinstimmung des gespeicherten mit dem gesendeten Revisionsdatenabschnitt der Dateninhalt des gespeicherten entsprechenden Revisionsdatenabschnittes inkrementiert. Nachteilig ist hierbei, daß nur mit hohem Aufwand vermieden werden kann, daß die Speicher der Frankiermaschine mit vielen nicht benötigten Daten gefüllt bzw. überfüllt sind. Außerdem ist es aufwendig sicherzustellen, daß die Verbindungsaufnahme seitens der Zentrale Erfolg hat. Ein Frankieren nach gültigen Posttarifen mit tragbaren Frankiermaschinen würde deren ständige Empfangsbereitschaft u.a. für Tarifänderungen erfordern.

Wenn die Frankiermaschine einen Portorechner enthält werden Gewichtsinformationen durch die Waage eingegeben. Für ein derartiges System ist gemäß EP 566 225 A2 bereits ein Verfahren zur Dateneingabe in eine Frankiermaschine bekannt, welches Chipkarten bzw. ein zellulares Kommunikationsnetz verwendet. Bekannte Chipkarten, die mehrere nichtflüchtige Speicher bzw. getrennt zugreifbare Speicherbereiche und einen Mikroprozessor aufweisen, werden nacheinander in die Schreib/Leseeinheit gesteckt, um unterschiedliche Informationen repräsentierende Daten in die Frankiermaschine seriell zu übertragen. Auf diese in der Frankiermaschine gespeicherten Daten kann dann während ihres Betriebes zurückgegriffen werden.

Durch EP 566 255 A2 wurde das Problem der Nichtgleichzeitigen Übertragung von tabellarischen Daten (die nicht allein auf Posttarifdaten beschränkt sind) dadurch gelöst, daß die Frankiermaschine erste Mittel aufweist, um mindestens eine Tabelle aus einem Übertragungsmittel über Empfangsmittel in einen vorbestimmten Speicherraum eines Speichermittels der Frankiermaschine zu laden. Tabellendaten oder Informationen liegen in Tabellen im Übertragungsmittel, insbesondere in mindestens einer Chipkarte, gespeichert vor und sind an bestimmte Bedingungen geknüpft abrufbar. Die vorgenannten ersten Mittel laden zum Zeitpunkt der Inbetriebnahme der Frankiermaschine diejenigen Tabellendaten aus dem vorgenannten Übertragungsmittel in den vorbestimmten Speicherraum eines Speichermittels in der Frankiermaschine, welche den in die Frankiermaschine eingegebenen Bedingungen, mindestens jedoch zwei Bedingungen (Absendeland und Datum, Name und Absendeland oder Name und Datum) entsprechend. Außerdem weist die Frankiermaschine zweite Mittel im Steuermodul auf, die die aktuelle in Kraft befindliche Tabelle und/oder Informationen, die für die Funktion der Frankiermaschine zur Verfügung stehen, anhand von weiteren Bedingungen (Uhrzeit, Paßwort und/oder anderen Kennungen) auswählen, wobei die weiteren Bedingungen über dritte Mittel eingebbar sind. Diese vorgenannten dritten Mittel umfassen mindestens Speicher-, Anzeige- und Eingabemittel sowie einen Uhrenbaustein.

Zu den Vorteilen dieser Lösung gehört, daß die Frankiermaschine mit ihren ersten Mitteln die in der Frankiermaschine vorhandenen Bedingungen mit den in der Chipkarte oder im Speicher des Mobilfunknetzes vorhandenen Bedingungen nach dem Einschalten bzw. während der Inbetriebnahme der Frankiermaschine vergleicht, um zugeordnete Tabellen zu laden. Damit besteht nicht die Fehlermöglichkeit, daß mit alten Daten gearbeitet wird, da eine Frankiermaschine die neuen Daten von der Zentrale nicht empfangen konnte, weil sie zum Zeitpunkt der Übertragung ausgeschaltet oder die Übertragung gestört war. Eine weitere vorteilhafte Wirkung ist die vollständig automatisch ablaufende dezentral initiierte Nachladung, die den Bediener und die Datenzentrale entlastet.

Die Frankiermaschine wird damit von keiner zentralen Stelle aus zur Revision der Tabelle adressiert, sondern die Zentrale übergibt die Daten an einen dezentralen Speicher des Übertragungsmittels. Die Daten werden von dort von jeder Frankiermaschine zu verschiedenen Zeitpunkten aber noch rechtzeitig vor Tarifänderung abgerufen. Die Frankiermaschine weist deshalb zweite Mittel in ihrem Steuermodul auf, um aus dem zentralen Angebot entsprechend den o.g. Bedingungen auswählen.

Der Vorteil dieser Lösung besteht also im Wegfall des Rufens einer Frankiermaschine und deren Adressierung von der Zentrale bzw. einem Sender aus. Die Verbindungsaufnahme erfolgt somit dezentral, von jeder Frankiermaschine ausgehend, zum Speicher im vorgenannten Übertragungsmittel. Für die Zentrale kann natürlich davon ausgegangen werden, daß die vom zentralen Speicher vorgegebenen Daten nicht gefälscht sind. Jede Tabelle steht also grundsätzlich für jede Frankiermaschine zur Verfügung. Eine Speicherung einer Adresse jeder Frankiermaschine ist deshalb im Übertragungsmittel nicht erforderlich.

Dritte Mittel bilden Auswahlmittel für die Tabelle, wobei der Uhren/Datumsbaustein und die Eingabemittel für Datum und Absendeland eingeschlossen sind. Diese befinden sich in der Frankiermaschine und erzeugen in Zusammenhang mit deren Benutzung die Bedingungen. Wird die Frankiermaschine dann eingeschaltet und liegen mindestens o.g. zwei Bedingungen (Absendeland und Datum, Name und Datum oder Absendeland und Name) vor, erfolgt nach der üblichen Initialisierung eine Übertragung der Tabellendaten. In vorteilhafter Weise wird durch zusätzlich eingegebene weitere Bedingungen, wie die Uhrzeit und/oder eine Kennung (Name oder Paßwort) auch die Übertragung weiterer Tabellendaten ermöglicht.

Vorteilhaft ist weiterhin, daß die Art der Benutzung der Frankiermaschine einen Einfluß darauf hat, welche Daten ihren Speicher füllen. Somit wird durch die Benutzung der Frankiermaschine bestimmt, welche Tabellendaten in ihr gespeichert vorliegen. Zwar wird anfangs Zeit benötigt, die Tabellendaten zu übertragen. Jedoch entfällt die Notwendigkeit alle Daten von Anfang an in der Frankiermaschine zu speichern, da mindestens ein Teil der Daten nachträglich übertragen werden kann.

Nachteilig ist jedoch, daß die Lösung nicht einfach auf ein System übertragen werden kann, in welchem die Frankiermaschine keinen Portorechner enthält, sondern in welchem die Waage einen Portorechner enthält und die errechneten Portowerte durch die Waage in die Frankiermaschine eingegeben werden. Hierzu müßte das Postabfertigungssystem mit einer weiteren Empfangseinrichtung bzw. Chipkarten-Schreib/Leseeinheit ausgerüstet werden, so daß der Speicherinhalt der Waage entsprechend aktualisiert werden kann. Zur Dateneingabe durch unterschiedlich autorisierte Bediener und zur Umgehung der Schwierigkeiten durch den auf einer Chipkarte nur begrenzt vorhandenen Speicherplatz wurde bereits vorgeschlagen, mehrere gleichzeitig in Schreib-Leseeinheiten eingesteckte Chipkarten zu verwenden.

Aus der US 4 802 218 ist ein automatisches Übertragungssystem mit mehreren Slots für Chipkarten bekannt. Neben einer Chipkarte für die Guthabennachladung und Abrechnung, wobei der zu druckende Portogebührenwert vom Guthaben subtrahiert wird, wird auch eine weitere Chipkarte für eine Portogebührentabelle verwendet. Mit Hilfe dieser Rate-Chipkarte wird der vorgenannte Portogebührenwert ermittelt. Dabei muß aber ständig auf die Chipkarte zugegriffen werden: Somit wird Rechenzeit für die Kommunikation mit den Schreib/Leseeinheiten verbraucht und der Datenfluß ist bedingt durch die serielle Schnittstelle zugleich geringer als beispielsweise bei einer parallelen Schnittstelle. Durch mehrere Schreib/Leseeinheiten wird das Gerät außerdem zu groß und zu teuer.

Der Erfindung liegt die Aufgabe zugrunde, für eine Anzahl von Nutzern die Dateneingabe in eine Waage unaufwendig vorzunehmen.

Es sollte ein Verfahren zur Dateneingabe von aktuellen Daten in eine Waage entwickelt werden, welches auf einem breiten Einsatz der Chipkarten oder eines anderen Kommunikationsmittels beruht und kostengünstig durchführbar ist. Es besteht die Forderung, die in der Waage gespeicherte Portogebührentabelle rechtzeitig zu aktualisieren.

Eine weitere Forderung dabei war, ein Postabfertigungssystem zu schaffen, welches eine Waage und eine Frankiermaschine einschließt und welches wahlweise oder alternativ von einer Datenzentrale mit Aktualisierungsdaten über eine Kommunikationsverbindung versorgt werden kann, wobei dezentral vom Postabfertigungssystem die Verbindungsaufnahme zwecks Kommunikation erfolgt.

Die Aufgabe wird mit den Merkmalen der unabhängigen Ansprüche 1, 4, 6 16 und 17 gelöst.

Die Erfindung basiert auf der Überlegung, die Portogebührentabelle auch für solche Waagen, die keinen MODEM-Anschluß oder Empfangseinrichtung für Mobil- oder Telefonnetz aufweisen, über die vorhandene serielle Schnittstelle zur Frankiermaschinen zu aktualisieren.

In einer bevorzugten Lösung kann ein entsprechender Satz von jeweils unterschiedlichen Daten tragenden Chipkarten für den Nutzer bereit gestellt und für eine sequentielle Dateneingabe genutzt werden, wobei über eine Schreib/Leseeinheit der Frankiermaschine und über eine serielle Schnittstelle zur Waage Aktualisierungsdaten übertragen und in einen Speichermittel der Waage nichtflüchtig gespeichert werden. Dabei genügt es, die einzige bereits in der Frankiermaschine vorhandene Chipkarten-Schreib/Leseeinheit mit zu benutzen, wenn Aktualisierungsdaten geladen werden müssen bzw. das Laden einer neuen Tabelle mit Aktualisierungsdaten, insbesondere einer neuen Portogebührentabelle erforderlich ist. Alternativ ist es möglich mittels Datenfernübertragung, vorzugsweise über MODEM Aktualisierungsdaten in das Postabfertigungssystem zu laden, wobei die Initiative wieder dezentral von dem vorgenannten System ausgeht.

Die Erfindung basiert weiterhin auf der Überlegung, mit der Beabsichtigung einer Tarifänderung der Portogebührenwerte die frühzeitige Aufstellung von Portogebührentabellen zu planen, so daß diese weit vor ihrem Inkrafttreten allem Postkunden zugänglich gemacht werden können. Es kommt darauf an, die Mehrheit der Teilnehmer rechtzeitig, statt wie bisher gleichzeitig mit einer aktuellen Portogebührentabelle auszustatten. Jeder Teilnehmer bzw. Nutzer des Postabfertigungssystems erfährt von der Datenzentrale eine Benachrichtigung, was sich demnächst an den relevanten Dateninhalten ändern wird und ist somit in der Lage die entsprechende Datenaktualisierung dann durchzuführen, wenn die Aktualisierungsdaten Gültigkeit erlangt haben.

Es ist vorgesehen, daß zunächst eine erste Datenübertragung von der Waage zur Frankiermaschine erfolgt, um die Überprüfungsdaten von der in der jeweiligen angeschlossenen Waage gespeicherten Portogebührentabelle zur Frankiermaschine zu übertragen und daß in der Frankiermaschine aufgrund der Überprüfungsdaten eine Gültigkeitsüberprüfung der Waagedaten bzw. der Portogebührentabelle vorgenommen sowie daß diese Gültigkeitsprüfung in Zeitabständen von der Datenzentrale überwacht wird. Bei der frankiermaschineninternen Gültigkeitsprüfung wird sowohl für Überprüfungsdaten der in der Waage gespeicherten Daten, als auch für die Information betreffend zukünftig aktueller Waagedaten, das Datum bzw. Zeit des Inkrafttretens berücksichtigt. Vorzugsweise sind die entsprechenden Bedingungen für die Auswahl der zu ladenden Tabellendaten im wesentlichen der Name des zukünftig zu ändernden Tabellenabschnitts und das Datum des Inkrafttretens des vorgenannten Tabellenabschnitts. Da nicht alle Umwandlungstabellenteile benötigt werden, wenn das Postabfertigungssystem am gleichen Ort verbleibt, kann ortabhängig eine weitere Einschränkung der Auswahl durch entsprechende Mittel vorgenommen werden. Ebenso kann vorteilhaft ein Teil des vorgenannten Namens einen ortabhängigen Bezug aufweisen, um die Auswahl zu erleichtern.

Wenn die Gültigkeitsprüfung ergibt, daß ein Laden einer neuen Tabelle bzw. von neuen Teilen einer Tabelle zur Aktualisierung der im Speichermittel der Waage gespeicherten Daten erforderlich ist, erfolgt eine zweite Datenübertragung aus dem Speicher des jeweiligen Übertragungsmittels zur Frankiermaschine, in welcher ein Tabellendatenpaket oder Teile daraus zunächst zwischengespeichert werden und dann zur Waage übertragen werden.

Zwar sind heute noch gar nicht so viele Daten in einer einzigen Chipkarte speicherbar, wie es vielleicht wünschenswert wäre. Es wäre aber bei vermehrten Datenverarbeitungsaufwand möglich, nur solche, auf die notwendige Datenmenge reduzierte, Daten in einer Chipkarte komprimiert zu speichern.

Unter Steuerung durch die Frankiermaschine werden in einer ersten Variante die Tabellendatenpakete erst vollständig von dem Übertragungsmittel zur Frankiermaschine übertragen und dort gespeichert und dann erst zur Waage übermittelt oder in einer zweiten Variante sofort jedes Tabellendatenpaket in den entsprechenden Speicher der Waage übertragen und dort gespeichert.

Lediglich Steuerdaten für die Übertragung zur Waage werden bei der vorgenannten zweiten Variante in der Frankiermaschine gespeichert. Am Ende der Übertragung wird ein entsprechendes Signal von der Frankiermaschine generiert und zur Waage übermittelt, welche nach Absendung eines entsprechenden Handshakesignals (ACK-Signal) und einer Dekomprimierung der Daten zum Einspeichern bzw. wenn die Übertragung abgeschlossen ist, zum Normalbetrieb übergeht. Es ist vorgesehen, daß die Waage einen Portorechner zur Versorgung der Frankiermaschine mit entsprechenden Portowerten einschließt und daß die Frankiermaschine eine elektronische Druckeinrichtung, vorzugsweise für digitalen Druck aufweist. Nach Eingang der von der Waage gesendeten ACK-Mitteilung in der Frankiermaschine und wenn keine weiteren Daten von dem Übertragungsmittel gelesen werden sollen, wird die Frankiermaschine ebenfalls in den Normalbetrieb bzw., wenn kein Postgut mit einem Portowert zu frankieren ist, in den Standby-Betrieb umgeschaltet.

Die Erfindung basiert weiterhin auf der Lösung gemäß EP 566 255 A2, nach der das Betriebssystem der Frankiermaschine in Verbindung mit einem Kommunikations- und Betriebssystem der Karte in der Lage ist, auf den Speicher der Chipkarte zuzugreifen und seinen Inhalt zu lesen, wenn einer der Nutzer der Frankiermaschine seine persönliche Chipkarte in die Chipkarten-Schreib/Leseeinheit steckt.

Ausgehend von der Tatsache, daß der Benutzer mehrere spezielle Chipkarten für die jeweilig beabsichtigte Waage- bzw. Frankiermaschinenfunktion verwenden kann, wird erfindungsgemäß ein Verfahren vorgeschlagen, wobei die Chipkarte zur Ausführung von Operationen nicht in der Maschine verbleiben muß.

Die Erfindung schließt den zusätzlichen Gedanken ein, jeweils eine dem Nutzer zugeschickte Chipkarte zu einer Standorteingabe und ortsabhängigen Veränderung des Ortnamens im Poststempel bzw. Werbeklischees zu nutzen. Dem Laden der vorgenannten ortabhängigen Veränderung geht ein Standortwechsel mit entsprechenden Ab- und Anmelden des Standortes und dem Übertragen einer Genehmigung bzw. Versenden einer entsprechenden Chipkarte an die Frankiermaschine voraus. Die entsprechenden Daten werden nichtflüchtig in einem Speichermittel der Frankiermaschine auf vergleichbare Weise, wie auch die anderen übermittelten Einstelldaten gespeichert.

Ausgehend von einem grundsätzlich transportablen ortsveränderlichen Postabfertigungssystem, wie es benötigt wird, wenn der Benutzer häufiger wechselt, welcher ein solches System mietet, wird somit eine Möglichkeit für eine Initialisierung einer Waage für örtlich verschiedene aktuelle Tarife auch von neu hinzugekommenen Postbeförderern geschaffen. Nach dem On Demand Prinzip werden Aktualisierungsdaten in die Waage des Postabfertigungssystem nachgeladen, um eine Portoberechnung nach aktuellen Tarifen zu gewährleisten. Wenn das Laden einer neuen Portogebührentabelle erforderlich ist, kann zur Datenfernübertragung vorteilhaft ein MODEM der Frankiermaschine genutzt werden, mit welchen auch andere Aktualisierungsdaten in das Postabfertigungssystem geladen werden können.

Im Normalmodus wird die Waage als Master und eine Frankiermaschine als Slave betrieben, wobei die Frankiermaschine die errechnete Portogebühr empfängt. Erfindungsgemäß erfolgt ein automatisches Überprüfen der in der Waage gespeicherten Dateninhalte durch die Frankiermaschine, um erforderlichenfalls eine Modusumschaltung vorzunehmen. Nach der Modusumschaltung wird die Waage als Slave betrieben, um Aktualisierungsdaten nachzuladen.

Eine eingeschaltete Waage wartet für ein temporär limitiertes Intervall auf eine Mitteilung von der Frankiermaschine zur Modusumschaltung, wobei die Waage in den Slave-Zustand umgeschaltet wird, wenn die Frankiermaschine ein Aktualisierungserfordernis erkennt. Anderenfalls nach ergebnislosen Verstreichen des vorgenannten temporären Intervalls, verbleibt die Waage im Master-Zustand (Normalmodus).

Die Frankiermaschine operiert ab der Erkennung eines Aktualisierungserfordernises solange als Master, bis die Aktualisierung abgeschlossen ist. Anderenfalls, d.h. ohne Aktualisierungserfordernis, verbleibt die Frankiermaschine im Slave-Zustand (Normalmodus).

Einer standortspezifischen Bereitstellung von Daten für die Waage aus einem externen Speicher über ein Kommunikationsnetz geht eine Eingabe der Postleitzahl in die Waage voraus. In einer Variante, bei der statt mittels Datenfernübertragung nun eine Eingabe des Standortes beispielsweise mittels Waage-Tastatur vorgenommen werden kann, besteht eine solche Eingabemöglichkeit nach dem Einschalten in einem Subschritt zum Schritt der Initialisierung der Waage, welche beispielsweise nach einem Ortswechsel von einem neuen Benutzer eingeschaltet wird. Ein weiterer Subschritt zum Schritt der vorgenannten Initialisierung erlaubt beispielsweise mittels Waage-Tastatur einen Satz an ausgewählten Postbeförderern zu definieren. Der vorgenannte Satz umfaßt mindestens einen der für den Standort möglichen Postbeförderer, für den die dem aktuellen Tarif entsprechende Portogebührentabelle geladen wird, sobald die Frankiermaschine ein Aktualisierungserfordernis erkannt hat. Die Datenzentrale liefert regelmäßig oder zu vorbestimmten Zeitpunkten eine Liste über Postbeförderer, denen ein Code zugeordnet ist. Bei Eingabe des Zuordnungscodes im vorgenannten Subschritt zum Definieren eines Satzes an Postbefördern nach dem Subschritt zur Ortseingabe und nach Übertragung von Überprüfungsdaten, erfolgt wieder die Überprüfung in der Frankiermaschine, welche ein Aktualisierungserfordernis feststellt und das Aktualisieren steuert. Dabei werden Teilbilddaten in die Frankiermaschine eingeladen, um mindestens den Ortsnamen und die Postleitzahl im Datumsstempel entsprechend dem Ortwechsel zu modifizieren. Die Datenzentrale weist eine Datenbank auf, in welcher vorgenannte Postleitzahlen (Zip to Zone) zugeordnet gespeichert zu wesentlichen Frankierbildteilen vorliegen. Damit kann entsprechend (beispielsweise nach dem im US 5,233,657 vorgeschlagenen Verfahren) ein übliches Logo des Postbeförders modifiziert werden.

In einer Variante mit Datenfernübertragung beispielsweise mittels MODEM und Mitteilung des Standortes von der örtlichen Vermittlungsstelle besteht eine automatische Eingabemöglichkeit. Nach dem Einschalten in einem Subschritt zum Schritt Initialisieren der Waage wird ein Kommunikationserfordernis gebildet, welches zur Frankiermaschine übermittelt wird. Durch die Frankiermaschine gesteuert, erfolgt ein Bereitstellen von Daten einerseits für die Waage und andererseits für die Frankiermaschine automatisch nach dem Einschalten.

Das standortspezifische Bereitstellen von Daten erfolgt mittels eines kartenförmigen Übertragungsmittels oder mittels externer Speicher durch ein Kommunikationsnetz (Modem, Mobilfunk). Moderne Telefon- und Mobilfunkdienste erlauben eine Standortbestimmung von der Datenzentrale kurzfristig vorzunehmen.

Die Rufnummer des rufenden Anschlusses wird zur gerufeen Datenzentrale übertragen und dort ausgewertet. Die Datenzentrale weist eine Datenbank auf, in welcher vorgenannte Rufnummernteile (Ortkennzahlen) zugeordnet gespeichert zu wesentlichen Frankierbildteilen vorlieen. Die Datenbank der Datenzentrale registriert für jede Frankiermaschine eine Zuordnung von Maschinennummer, Standort und geladene Befördererkonstellation, wobei die Möglichkeit besteht, durch Eingabe des Standortes bzw. durch Definition eines neuen Satzes an Postbeförderern den bisherigen Standortnamen oder die bisherige Befördererkonstellation zu wechseln. Falls die Mindestgültigkeitsdauer für die in der Waage gespeicherten Tarife überschritten ist oder ein anderer Satz an Postbeförderer definiert wurde, wird automatisch die Datenzentrale angewählt.

Die erfindungsgemäße Lösung erlaubt also eine Standortveränderung problemlos vorzunehmen, ohne daß eine Zusendung eines Moduls für neue Portogebührentabellen-Speicher erforderlich wird, oder gar ein Service-Techniker vor Ort erscheinen muß. Damit werden in vorteilhafter Weise erhebliche Kosten zur Umrüstung insbesondere von vermieteten Systemen eingespart.

In vorteilhafter Weise werden die in der Frankiermaschine vorhandenen Eingabemittel (Chipkarte, Telefonanschluß) auch für die Waage genutzt. Der Vorteil der erfindungsgemäßen Lösung besteht in der Mobilität für ein ganzes eine Porto berechnende Waage einschließendes Postabfertigungssystem, wobei die Ortsveränderung in der Datenzentrale registriert werden kann.

Die transportable Frankiermaschine/Waage-Anordnung erkennt die sich ändernden Bedingungen und tritt einmal von sich selbst aus oder nach entsprechender Eingabe und automatischer Erkennung eines Aktualisierungserfordernisses mit einem externen Speicher in Kommunikationsverbindung. Die Frankiermaschine steuert dann die Datenübertragung zur Waage. Vorteilhaft wird für weitere Postbeförderer (wie Trans-o-flex, UPS und/oder andere Carrier) neben der Deutsche Post AG in Deutschland oder beispielsweise für USPS in den USA eine Lösung geschaffen, um den Standort, um ein entsprechendes Logo für den jeweiligen Carrier, und um die geltende Tariftabelle des jeweiligen Beförderers in das System einzuladen, ohne mechanisch bzw. durch Servicetechiker in das System eingreifen zu müssen.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: Postabfertigungssystem, umfassend eine mit Chipkarten-Schreib-Leseeinheit ausgerüstete Frankiermaschine und eine Waage,
- Figur 2,: Blockschaltbild für eine Frankiermaschine und eine Waage,
- Figur 3,: Flußdiagramm einer Dateneingabe für die Waage
- Figur 4,: Flußdiagramm einer Dateneingabe für die Frankiermaschine,
- Figur 5,: Flußdiagramm zum Auslesen von Daten aus der Chipkarte,
- Figur 6,: Routine zum Tabellendatenauslesen aus der Chipkarte,
- Figur 7,: Nachladeroutine für die Frankiermaschine, um eine Datenübertragung zur Waage durchzuführen
- Figur 8,: im externen Speichermittel gespeicherter Datenblock,
- Figur 9,: Teilflußdiagramm in der Frankiermaschine für eine automatische Kommunikation per MODEM,
- Figur 10,: Routine zum Einbinden übermittelter Teilbilddaten in Bilddaten,
- Figur 11,: Routine zum Behandeln übermittelter Tabellendaten in der Frankiermaschine,
- Figur 12,: Routine zur Auswertung von übermittelten Überprüfungsdaten und zur Bildung von Anforderungsdaten,
- Figur 13,: Gesamtablaufplan für die Frankiermaschine,
- Figur 14,: Ablaufplan für die Waage im Normalmodus,

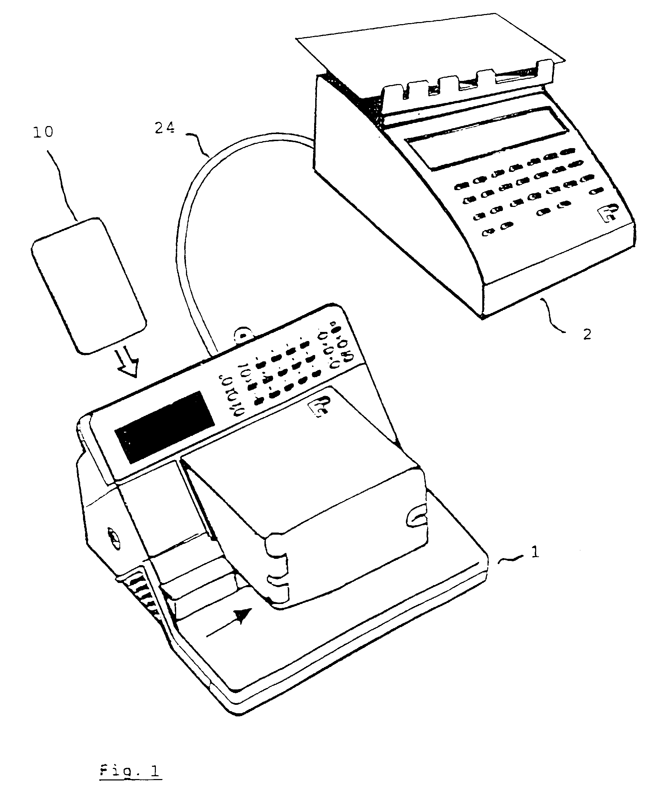

Das in der Figur 1 dargestellte Postabfertigungssystem weist serielle Schnittstellen-Leitungsverbindung 24 von einer Frankiermaschine 1 zu einer Waage 2 auf. Die Frankiermaschine 1 ist mit einem MODEM-Anschluß bzw. mit einem Telefonanschluß bei internem MODEM, mit einer Chipkarten-Schreib/Leseeinheit und mit einer seriellen Schnittstelle RS-232, vorzugsweise auf der Gehäuserückseite ausgerüstet.

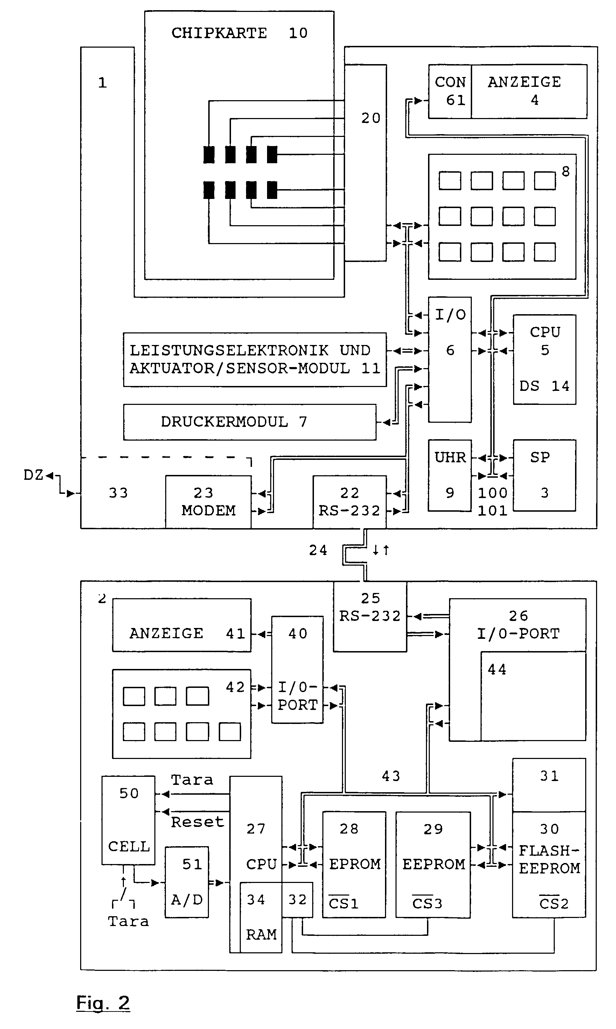

In der Figur 2 wird anhand eines Blockschaltbildes der prinzipielle Aufbau einer Frankiermaschine 1 und einer Waage 2, welche das erfindungsgemäße Verfahren durchzuführen gestatten, erläutert.

Im Frankiermaschinengehäuse sind Ein- und Ausgabemittel 4, 8, 20, 22, 23 über ein Ein/Ausgabe-Steuermittel 6, mit einem einen posttechnischen Sicherheitsbereich aufweisenden Prozessorsystem 3, 5, 9, 14, 100, 101 direkt oder über einen BUS verbunden. Das Prozessorsystem besteht aus mindestens einem Speichermittel 3, einem Uhr/Datums-Modul 9, einem eine Drucksteuerung (DS) 14 und eine Verarbeitungseinheit (CPU) aufweisendes Steuermittel 5 und einer speziellen Schaltung 100 bzw. 101. Die spezielle Schaltung und/oder Programm-Mittel 100, 101 sind vorzugsweise Bestandteil eines batteriegestützten (nichtflüchtigen) Speichers (CMOS-NV-RAM) im Uhr/Datums-Modul 9 und/oder eines nichtflüchtigen Speichers (EEPROM) im Speichermittel 3.

Das Speichermittel 3 besteht in üblicher Weise aus mehreren permanenten und temporären nichtflüchtigen Speichern. Ein Teil der Speicher bildet mit der CPU 5 in bekannter Weise einen geschützten postalischen Bereich innerhalb des Prozessorsystems. Ein Permanentspeicher der Speichermittel 3 der Frankiermaschine 1 weist Programme für eine Kommunikation über Schnittstellen 20, 22, 23 mit den externen Eingabemitteln auf. Die Eingabemittel stellen die Verbindung zu Übertragungsmitteln 10, 13 her.

Die Base der Frankiermaschine besteht aus einem Drukkermodul 7 und einem Leistungselektronik/Aktuator- Sensormodul 11, der eine Energieversorgung und Steuerung für die Antriebe (Papiertransport, Drucker, Band, Streifengeber) enthält. An dem Prozessorsystem können auch noch weitere - nicht näher dargestellte - periphere Ein/Ausgabemittel 21 angeschlossen sein. Diese sind mit dem Prozessorsystem 3, 5, 9, 14, 100, 101 direkt und/oder über das Ein/Ausgabe-Steuermittel 6 gekoppelt.

Das Postabfertigungssystem weist ein Empfangsmittel 33 bzw. ein internes MODEM oder MODEM-Schnittstelle 23 in der Frankiermaschine für ein externes MODEM und eine RS-232-Schnittstelle 22 in der Frankiermaschine und eine RS-232-Schnittstelle 25 in der Waage 2 auf. Über MODEM wird eine Kommunikation mit einer entfernten Datenzentrale und über die vorgenannte RS-232-Schnittstelle und einem entsprechenden Verbindungskabel 24 eine Kommunikation innerhalb des Postabfertigungssystems zwischen Frankiermaschine und der Waage 2 ermöglicht.

Von der Datenzentrale erfolgt die Übermittlung einer Name und Gültigkeitsdatum umfassenden Information an die Frankiermaschine, beispielsweise im Kommunikationsmodus während der Guthabennachladung. Alternativ kann auch eine anderer Form der Benachrichtigung gewählt werden. Beispielsweise kann ein Chipkarte übersandt werden, welche die vorgenannte Information neben der zukünftigen Aktualisierungsdaten bzw. Portogebührentabelle in einem separaten Speicherbereich enthält, welcher sofort vom Nutzer abgefragt bzw. dessen Information in die Frankiermaschine geladen wird. Die eigentliche Übertragung des neuen Tarifs erfolgt erst später im Bedarfsfalle. Auch tragbare zwischenzeitlich nicht eingeschaltete bzw. nicht betriebsbereite Postab-fertigungssysteme erhalten diese Aktualisierungsdaten noch rechtzeitig, sofort nach dem Einschalten. Das wird vor allem durch die Kontrolle von seitens der Waage übermittelten Überprüfungsdaten und der in vorgenannter Weise geladenen Information unter Mitwirkung des von einer separaten Energiequelle gespeisten Uhren/Datums-Bausteins gewährleistet. Anhand des für den Poststempel eingestellten Datums wird beurteilt, ob die durch die Überprüfungsdaten gekennzeichneten Daten in der Waage noch aktuell sind oder ob bereits die Information hierzu vorliegt, daß diese Daten aktualisiert werden müssen. Wenn also die entsprechenden Bedingungen dafür vorliegen bzw. herangereift sind, Aktualisierungdaten zu laden, wird von der Frankiermaschine angezeigt, daß eine bestimmte durch eine Kennummer gekennzeichnete Chipkarte in den Slot der Schreib/Leseeinheit der Frankiermaschine eingesteckt werden muß, um einen entsprechenden Tabellenabschnitt in die Waage zu laden.

Ein externer Speicher mit Aktualisierungsdaten kann alternativ auch in einem Kommunikationsnetz vorgesehen sein und durch eine entsprechende Kommunikationsverbindung angesprochen werden. Eine Zwischenspeicherung in einem Übertragungsmittel und eine automatische Übernahme des aktuellen Tarifs durch die Frankiermaschinen vorausgesetzt, werden unter Steuerung durch die Frankiermaschine dann Tabellendatenpakete in die Waage übertragen.

Das Postabfertigungssystem weist ein MODEM oder MODEM-Schnittstelle zum Anschluß eines externen MODEMs auf, um Daten in die Frankiermaschine bzw. Waage zu laden. In einer Variante ist vorgesehen, daß als erstes Übertragungsmittel ein Kommunikationsnetz, das einen Speicher mit den abrufbaren Daten und/oder Flags zur Nachladung von Zusatzfunktionen- und Informationen in die Frankiermaschine enthält, eingesetzt ist.

Außerdem ist mindestens ein weiteres Übertragungsmittel 10 zur Aktualisierung gespeicherter Daten im Postabfertigungssystem, d.h. in der Frankiermaschine und/oder Waage vorgesehen. Ein solches Übertragungsmittel ist alternativ eine Chipkarte 10, die mit dem als Eingabemittel 20 dienende Chipkarten-Schreib/Lese-Einheit 20 in Kontakt gebracht wird.

Die Interfaceplatine der Chipkarten-Schreib/Leseeinheit ist mit einer seriellen Schnittstelle der Frankiermaschine verbunden. Die Kontaktiereinrichtung weist mindestens 6 Kontakte auf und der Datenaustausch zwischen dem ungeschützten und/oder dem geschützten Kartenspeicherbereich und einem nichtflüchtigen Speicher der Programmspeichermittel der Frankiermaschine wird seriell im Rahmen eines Kommunikationsprotokolls automatisch vorgenommen wird, sobald die Chipkarte in den Einsteckschlitz eingesteckt worden ist.

Eine persönliche Chipkarte der Nutzer kann neben einer Standorteingabe vorteilhaft auch zusätzlich zur kostenstellenabhängigen Einstellung eines Werbeklischees genutzt werden. Dies wurde bereits in der EP 566 225 A2 vorgeschlagen. Damit entfallen in vorteilhafter Weise die sonst jeweils erforderlichen benutzerrelevanten Einstellungen der Kostenstelle und des Werbeklischees über die Tastatur der Frankiermaschine. Darüber hinaus wird zusätzlich zur Einstellung ein entsprechendes Poststempel- bzw. Klischee-Textteil übermittelt, um die vorhandenen bereits gespeicherten Druckbilddaten entsprechend dem Standortwechsel modifizieren zu können.

Zwar wurde bereits in der DE 40 33 164 vorgeschlagen, auf eine Chipkarte, welche in einem ihrer beiden Speicherbereiche neue Werbeklischeedaten enthält, beim Druck zuzugreifen. Jedoch soll im Unterschied dazu das Werbeklischee nur teilweise und diese Teile nur einmalig nach einem Standortwechsel nachgeladen werden.

Eine Anordnung und ein Verfahren zur Klischeetextteiländerung für Frankiermaschinen wurde bereits in der DE 42 21 279 A1 vorgeschlagen und kann natürlich auch für die Zuordnung von semivariablen Fensterdaten, welche den Standort im Poststempel betreffen, zu den übrigen Daten eingesetzt werden. Im Unterschied zu dieser Lösung wird jedoch das Textteil nicht mittels der Eingabemittel der Frankiermaschine editiert. Vielmehr wird der genehmigte Textteil lediglich nachgeladen.

Diese Art der Nachladung ist besonders für digitale Druckverfahren vorgesehen, welche das Einbetten variabler bzw. semivariabler Fensterpixelfelddaten in konstante Rahmenpixelfelddaten erlauben. Ein solches Verfahren zum Steuern des spaltenweisen Drucks eines Postwertzeichenbildes in einer Frankiermaschine ist beispielsweise in der EP 578 042 A2 beschrieben.

Die Frankiermaschine ist mit einem nichtflüchtigen Speicher für eine Anzahl jeweils der Kostenstelle des Benutzers zugeordneten Werbeklischees und mit einer Chipkarten-Schreib/Leseeinheit ausgestattet und ermöglicht einen öfteren Kartenwechsel für eine Vielzahl an Nutzern.

In Schaltungs- bzw. Programm-Mitteln 100 sowie 101, welche in den nichtflüchtigen Speicherbereichen des Uhren/Datums-Modul 9 und/oder des Speichermittels 3 vorliegen, ist ein entsprechender Ablauf zum Datenladen bzw. zur Aktualisierung gespeichert. Der geschützte postalische Bereich des Prozessorsystems der Frankiermaschine kann - in einer hier nicht gezeigten Weise - beispielsweise als ASIC ausgebildet sein, so daß der Ablauf nicht unbefugt manipuliert werden kann.

An die RS-232-Schnittstelle 25 der Waage 2 ist ein Ein/Ausgabe-Port 26 angeschlossen, welches mit dem internen BUS 43 mit dem Prozessor 27 der Waage 2 in Verbindung steht. Ein solcher BUS schließt Daten-, Adreß- und Steuerleitungen ein.

Die Waage umfaßt über ein I/O-Port 40 mit dem Prozessor 27 verbundene Eingabe- und Ausgabemittel 42 und 41 sowie über den internen BUS 43 mit dem Prozessor 27 verbundene Speichermittel 28 zum Speichern der Betriebssoftware der Waage, Speichermittel 29 zum Speichern von Anwendungsdaten (beispielsweise Wahldruck-Nummern) und Speichermittel 30 zum Speichern von Aktualisierungsdaten (z.B. der Portotabellen). Zum Ermitteln des Gewichtes ist eine Wiegezelle 50 über einen A/D-Wandler 51 mit dem Prozessor 27 verbunden und außerdem dienen direkte Verbindungen zum Rücksetzen (Reset) oder Tarieren (Tara) der Wiegezelle 50 durch den Prozessor 27.

Ist die Waage im Normalmode an die Frankiermaschine angeschlossen, arbeiten beide im Master/Slave-Betrieb zusammen, wobei die Waagebefehle den Vorrang haben. Die Waage ist Master und die Frankiermaschine Slave. Wird beispielsweise eine Wahldrucknummer über die Tastatur 42 der Waage 2 eingegeben und zur Frankiermaschine 1 übermittelt, erscheint beim Druck der Wahldruck links neben der Frankierung (Wertzeichen, Poststempel, Werbeklischee). Wahldrucke sind Kombinationen von Versendungsarten (z.B. Brief) und Versendungsformen (z.B. Einschreiben) und können entsprechend der Klischeekonfiguration der Frankiermaschine in die Waage einprogrammiert werden.

Alle notwendigen Eingaben werden über die Tastatur 42 vorgenommen. Auf dem Display 41 werden solche wichtigen Informationen ausgegeben, wie zum Beispiel das Gewicht des Postgutes und das anhand der Portogebührentabelle ermittelte Porto.

Wird die Waage in den Aktualisierungsmode umgeschaltet, können Aktualisierungsdaten geladen werden. Diese betreffen verschiedene Anwendungsdaten und insbesondere die Portogebührentabelle, welche ganz oder teilweise geändert werden sollen. Im Aktualisierungsmode ist die Frankiermaschine Master und die Waage Slave.

Die Waage besitzt als Speichermedium für die Aktualisierungsdaten einen Flash-EEPROM 30. Vor dem Laden der neuen Portogebührentabelle bzw. entsprechenden Aktualisierungsdaten müssen die betreffenden Speicherbereiche im Flash-EEPROM 30 gelöscht werden, die die alte Portogebührentabelle bzw. die zu ändernden Daten enthalten.

Wenn das Speichermittel für Aktualisierungssdaten Flash-EEPROM 30 einen entsprechend großen Speicherbereich besitzt, kann der Speicherbereich vorteilhaft in Bereiche aufgeteilt werden. Der untere Speicherbereich wird für die Portotabelle verwendet, der zweite Speicherbereich kann für anderere Einstellungen der Waage, beispielsweise für die USA für die Speicherung der Zip-to-Zone-Umwandlungstabellen verwendet werden. Sollen in den USA Portowerte berechnet werden, dann wird ab einem bestimmten Gewicht der Bestimmungsort (Bestimmungszipcode) für die Portoberechnung notwendig.

Für jeden Standort existiert eine eigene Umwandlungstabelle. Wird die Waage für ihren Standort initialisiert, dann wird die entsprechende Zip-to-Zone-Umwandlungstabelle aus dem Speichermittel für Aktualisierungsdaten FLASH-EEPROM 30 ausgelesen, dekomprimiert und im Speicher EEPROM 29 für Anwendungsdaten der Waage gespeichert. Zum Aktualisieren der Portogebührentabelle gehört damit immer auch ein Initialisieren für den jeweiligen Standort. Soll der Standort beispielsweise in eine andere Stadt verlegt werden müssen Änderungen in die Frankiermaschine (Stadtname im Poststempel) und in die Waage eingegeben werden. Seitens der Frankiermaschine kann die Aktualität der Eingaben bzw. Einstellung auf den Standort überwacht werden.

Im Aktualisierungsmode der Waage werden in einer Variante komprimierte Daten in das interne RAM 34 des Prozessors 27 eingelesen und mit Hilfe der im Speichermittel EPROM 28 gespeicherten Betriebssoftware dekomprimiert. In einer anderen Variante werden im Aktualisierungsmode der Waage komprimierte Daten im internen RAM 34 des Prozessors 27 eingelesen und nur bestimmte Datenblöcke mittels der im Speichermittel EPROM 28 gespeicherten Betriebssoftware dekomprimiert. Somit können im Speichermittel für Aktualisierungsdaten FLASH-EEPROM 30 alle Umwandlungstabellen komprimiert aber alle Portogebührentabellen dekomprimiert gespeichert sein.

Zum Einlesen der Zip-to-Zone-Umwandlungstabelle in den Speicher für Anwendungsdaten EEPROM 29 wird die entsprechende Chipselect-Leitung CS3 vom Prozessor 27 direkt oder indirekt über eine angeschlossenen Umschalteinrichtung 32 aktiviert. Bei der Portoberechnung wird nur die jeweilige Umwandlungstabelle des Standortes benötigt, die aus dem Speichermittel für Anwendungsdaten EEPROM 29 ausgelesen wird.

Eine erste Variante des Flash-EPROMs 30, die mit vereinfachten bzw. ohne besonderes Protokoll auskommt und in der Figur 2 dargestellt ist, benötigt eine adresssierbare Zusatzschaltung 31, die eine 12 V-Programmierspannung an den Flash-EEPROM 30 anlegt, wenn beispielsweise Portotabellen gespeichert werden sollen.

Für eine andere - nicht gezeigte - Variante des Flash-EPROMs wird eine Programmierspannung von 5 V benötigt. Außerdem muß ein bestimmtes Protokoll abgearbeitet werden, um den Baustein zu löschen und zu programmieren.

Es ist daher und zur Sicherheit gegen ein unbeabsichtigtes bzw. unautorisiertes Löschen vorteilhaft, wenn die vorgenannte Zusatzschaltung zu einem programmierbaren Sicherheitsmittel 31 erweitert wird. Diese Sicherheitsmittel 31 können vorteilhaft im Speichermittel 30 integriert werden. Erfindungsgemäß ist deshalb vorgesehen, daß die Waage erste Mittel aufweist, welche Speichermittel 28, 29, 30, Anzeigeund Eingabemittel 41, 42 sowie programmierbare Sicherheitsmittel 31 gegen unbefugtes Löschen von Datenblöcken im Speichermittel 30 für Aktualisierungsdaten einschließen.

Die Anordnung zur Dateneingabe in eine Waage eines Postabfertigungssystems benötigt eine Steuerung durch die Frankiermaschine, die erste Mittel aufweist, um mindestens eine Tabelle aus einem Übertragungsmittel über Empfangsmittel in einen vorbestimmten Speicherraum eines Speichermittels der Frankiermaschine zu laden. Erfindungsgemäß ist vorgesehen, daß die ersten Mittel nach Inbetriebnahme der Frankiermaschine 1 entsprechend den in die Frankiermaschine eingegebenen Bedingungen, mindestens jedoch zwei Bedingungen (Name und Datum) entsprechend, die Aktualisierungsdaten oder Informationen, die als Datenblöcke im Übertragungsmittel 10 gespeichert vorliegen und die ebenfalls an diese Bedingungen geknüpft abrufbar sind, in den vorbestimmten Speicherraum des Speichermittels 3 und/oder 9 der Frankiermaschine 1 laden. Die Frankiermaschine weist zweite Mittel im Steuermodul 5 auf, zur Überprüfung der durch die ersten Mittel der Waage übermittelten Überprüfungsdaten für die aktuellen in Kraft befindliche Tabellendaten der Waage 2 und/oder Überprüfung der Informationen, die in der Frankiermaschine 1 zur Verfügung stehen, um ggf. eine Modusumschaltung vorzunehmen, wenn anhand der durch erste bzw. dritte Mittel vorgenannten Bedingungen (Name und Gültigkeitsdatum bzw. Datumseinstellung ein Nachladeerfordernis festgestellt wird. Die vorgenannten dritten Mittel sind Hard- und Softwaremittel des Uhren/Datumsbausteins 9.

Es wird dafür gesorgt, daß im Übertragungsmittel 10 mindestens eine Portogebührentabelle aufrufbar vorliegt, daß die Frankiermaschine 1 im Steuermittel 5 Mittel aufweist, die bei Inbetriebnahme der Frankiermaschine 1 mindestens eine Portogebührentabelle für die Waage aus dem Übertragungsmittel 10 über die Empfangsmittel 33, 23, 20, in einen vorbestimmten Speicherraum des Speichermittels 3 und/oder 9 der Frankiermaschine 1 laden und daß die Frankiermaschine weitere Mittel im Steuermodul 5 aufweist, die anhand des über Übertragungsmittel 10 eingegebenen Absendelandes bzw. Standortes und des Datums die aktuelle in Kraft befindliche Umwandlungs- bzw. Portogebührentabelle auswählen, anhand derer die jeweilige Portogebühr ermittelt wird, sowie die mittels einer Nachladeroutine den Dateninhalt im Speichermittel 30 für die Aktualisierungsdaten der Waage mit neuen Aktualisierungsdaten aktualisieren, daß das Speichermittel 30 für die Aktualisierungsdaten der Waage mindestens Speicherbereiche für die Portogebührentabellen, für die Umwandlungstabellen und für den genehmigten Standort aufweist. Von den vorgenannten Mitteln der Frankiermaschine werden Steuerdaten für die Übertragung zur Waage im Speichermittel 3 und/oder 9 der Frankiermaschine gespeichert.
Außerdem wird von den vorgenannten Mitteln der Frankiermaschine am Ende der Übertragung ein entsprechendes Signal generiert und zur Waage übermittelt.
Die Waage besitzt zweite Mittel 27, 44, welche nach Überprüfung und Absendung eines entsprechenden Handshakesignals (ACK-Signal) und einer Dekomprimierung der Daten zum Einspeichern bzw. wenn die Übertragung abgeschlossen ist und nach einer Initialisierung die Waage 2 in den Normalmodus umschalten.

Die Erfindung hat den Vorteil, daß der übliche Austausch des Porto-EPROMs der Waage entfällt. Statt dessen wird eine neue Portogebührentabelle ganz oder mindestens teilweise aus dem Übertragungsmittel über die Frankiermaschine in die Waage geladen. Die entsprechenden Aktualisierungsdaten werden im Speicher einer Chipkarte oder eines Kommunikationsnetzes bzw. in der Datenzentrale gespeichert. Um die Aktualisierungsdaten laden zu können, wird der Inhalt der Chipkarte ausgelesen und über die serielle Schnittstelle erst der Frankiermaschine und dann der Waage zugeführt.

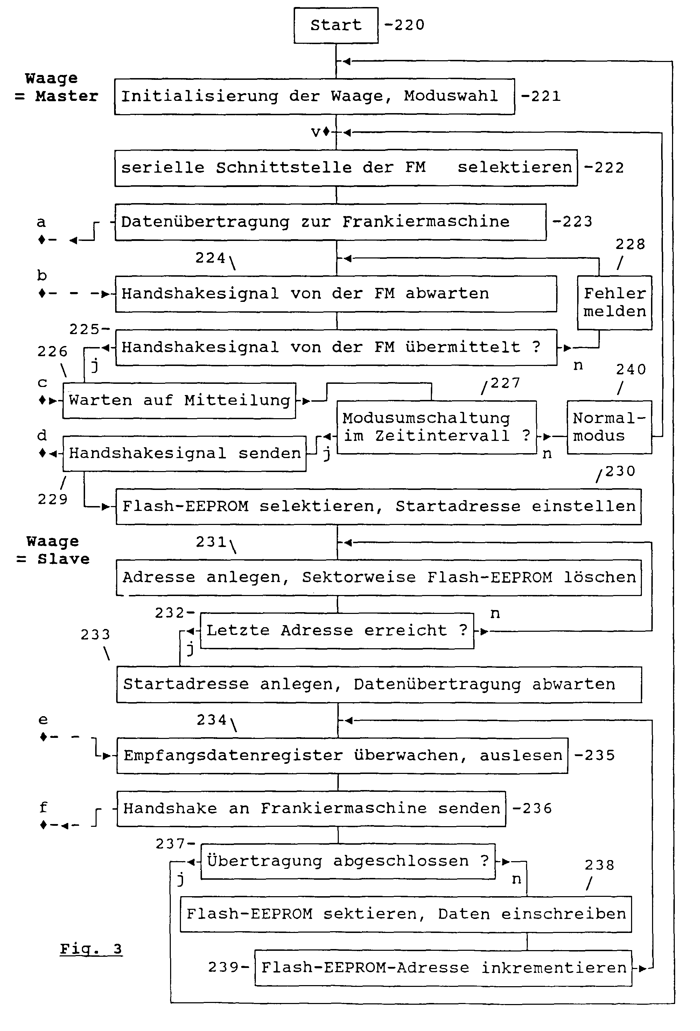

In der Figur 3 ist ein Flußdiagramm einer Dateneingabe für die Waage dargestellt. Nach dem Einschalten der Waage im Schritt 220 startet nach einer Initialisierung im Schritt 221 der Ablauf für die Waage 2 entsprechend der erforderlichen Moduswahl für das Postabfertigungssystem (Waage = Master, Frankiermaschine = Slave). Die serielle Schnittstelle der Frankiermaschine wird im nachfolgenden Schritt 222 selektiert, damit eine Datenübertragung im Schritt 223 zur Frankiermaschine 1 erfolgen kann. Bestandteil einer ersten Mitteilung seitens der Waage 2 an die Frankiermaschine sind Überprüfungsdaten. Die Waage wartet nun im nächsten Schritt 224 auf ein entsprechendes Handshakesignal (ACK). Wird kein Signal oder ein NACK-Signal (non acknowledge) übermittelt, wird nach dem Prüf-Schritt 225 über den Schritt 228 zum Fehlermelden auf den Schritt 224 zurückverzweigt. Andernfalls bei einem ACK-Signal wird im Schritt 226 auf eine Mitteilung seitens der Frankiermaschine 1 gewartet, daß der Modus umzuschalten ist, um in den Aktualiesierungsmodus der Waage 2 zu gelangen und um mindestens den Inhalt eines Datenblocks zu ändern. Im Schritt 226 wird das Empfangsdatenregister im I/O-Port 26 der Waage überwacht. Geht in einem definierten Zeitintervall keine solche Mitteilung ein, verbleibt die Waage (Master) im Normalmodus und kann nun im Schritt 240 entsprechend betrieben werden, um Portowerte zu ermitteln und an die Frankiermaschine (Slave) zu übertragen.

Geht jedoch im Zeitintervall eine Mitteilung zur Modusumschaltung ein, wird im Schritt 229 ein entsprechendes Handshakesignal an die Frankiermaschine 1 gesendet und dann auf den Schritt 230 verzweigt, um das Flash-EEPROM zu selektieren und die Startadresse entsprechend einzustellen wie dem Namen des mindestens einen Datenblocks zu entnehmen ist.

Im Schritt 231 wird die Adresse angelegt, um den Flash-EEPROM sektorweise zu löschen. Im Schritt 232 wird geprüft, ob die letzte Adresse erreicht ist. Ist das der Fall, wird auf den Schritt 233 verzweigt um die Startadresse an den Flash-EEPROM 30 anzulegen und die Datenübertragung von der Frankiermaschine abzuwarten.

Anderenfalls wird auf den Schritt 231 zurückverzweigt, um den nächsten Sektor zu löschen.

Von der Frankiermaschine kann nun eine Datenübertragung erfolgen, wobei die Daten aus internen Speichern 3, 9 der Frankiermaschine 1 und/oder aus externen Speichern, beispielsweise einer Chipkarte 10 stammen.

Im Schritt 234 wird das Empfangsdatenregister im I/O-Port 26 der Waage überwacht und der empfangene Datenblock ausgelesen (235) und im internen RAM 34 des Prozessors 27 der Waage 2 gespeichert. Im I/O-Port 26 können Mittel 44 vorgesehen sein, welche eine Zeit- oder andere relevante Größe überwachen, um ein Ende oder eine Unterbrechung der Datenübertragung festzustellen und um ein ACK bzw. ggf. ein NACK-Signal zu generieren. Ein entsprechendes Handshakesignal wird dann im Schritt 236 an die Frankiermaschine übermittelt. Im nachfolgenden Schritt 237 wird vom Prozessor 27 festgestellt, ob die Übertragung abgeschlossen ist, um dann auf den Initialisierungsschritt 221 der Waage zurückzuverzweigen oder anderenfalls wenn die Übertragung noch nicht abgeschlossen ist, auf den Schritt 238 zu verzweigen. In diesem Schritt 238 wird nun das Flash-EEPROM 30 selektiert um die Datenblöcke einzuschreiben. Anschließend wird die Flash-EEPROM-Adresse inkrementiert bzw. weitergeschaltet, um einen weiteren Datenblock einschreiben zu können. Dazu wird dann wieder auf den Schritt 234, 235 zurückverzweigt.
Ist die Übertragung abgeschlossen, kann im Initialisierungs-Schritt 221 eine automatische Bereitstellung von Anwendungsdaten erfolgen. Entsprechend eines den Standort betreffenden Datenblockes, welcher ebenfalls mit Name und Gültigkeitsdatum gekennzeichnet ist, wird dann die entsprechende Zip-to-Zone-Umwandlungstabelle im Speichermittel für Anwendungsdaten EEPROM 29 dekomprimiert eingespeichert. Dann wird wieder im Schritt 222 die serielle Schnittstelle zur Frankiermaschine 1 selektiert. Im Schritt 223 werden aus dem Speichermittel für Anwendungsdaten EEPROM 29 Überprüfungsdaten ausgelesen und zur Frankiermaschine Übermittelt.

Solche Überprüfungsdaten betreffen den Namen relevanter Datenblöcke, welche aktualisiert werden können und ein zugehöriges Gültigkeitsdatum. In der Frankiermaschine 1 liegt eine mindestens eine Information für solche - ab einen bestimmten Datum gültig werdende bzw. vorzunehmende - Änderungen für jeden Datenblock vor.

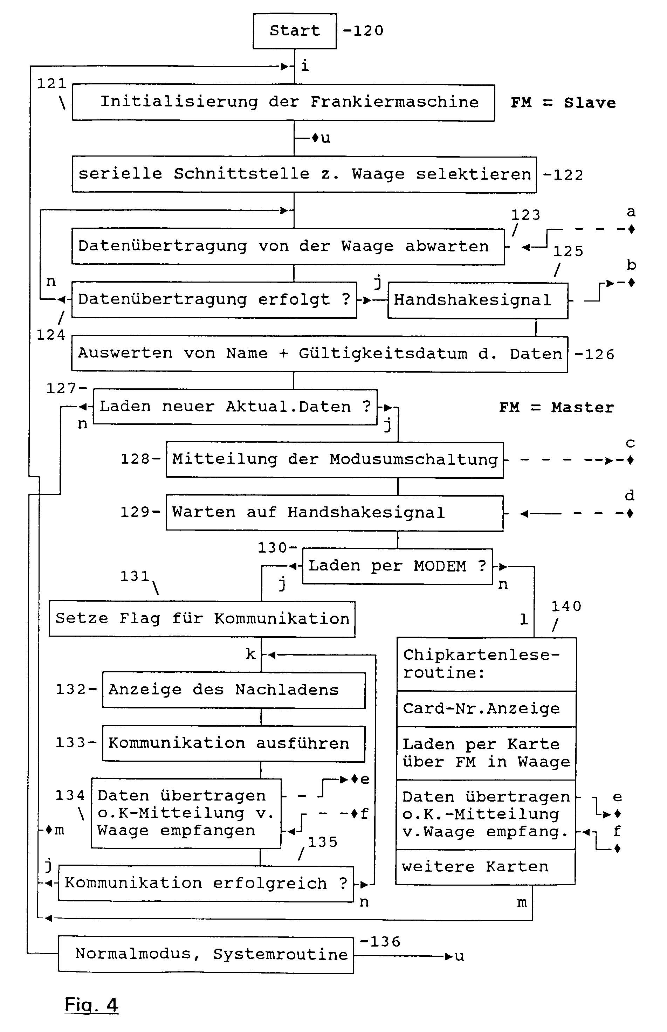

In der Figur 4 ist ein Flußdiagramm einer Dateneingabe für die Frankiermaschine dargestellt, welches an den mit a bis f gekennzeichneten Punkten mit dem entsprechenden - in der Figur 3 gezeigten - Flußdiagramm der Waage kommuniziert.

Nach dem Start (Schritt 120) erfolgt im Schritt 121 eine Initialisierung der Frankiermaschine, dabei wird festgestellt, ob die Waage-Taste gedückt worden ist und somit in den entsprechenden Postabfertigungssystemmodus übergegangen. Die Frankiermaschine arbeitet nun als Slave und die Waage als Master. Im Schritt 122 wird die serielle Schnittstelle zur Waage selektiert. Anschließend wird im Schritt 123 eine Datenübertragung von der Waage abgewartet, bei welcher Überprüfungsdaten übermittelt werden. Ist die Datenübertragung erfolgt (Schritt 124), wird auf den Schritt 125 verzweigt, um ein entsprechendes Handshakesignal an die Waage zu übermitteln. Anderenfalls wird auf den Schritt 123 zurückverzweigt. Die Frankiermaschine ermöglicht im Schritt 126 ein Auswerten der übermittelten Überprüfungsdaten aufgrund von Name und Gültigkeitsdatum jedes relevanten Datenblocks. Im Schritt 127 kann nun entschieden werden, ob das Laden neuer Aktualisierungsdaten erforderlich ist.

Entsprechend der Auswertung im Schritt 126, d.h. wenn neue Aktualisierungsdaten geladen werden müssen (127) erfolgt eine Mitteilung über die vorzunehmende Modusumschaltung im Schritt 128.
Die Frankiermaschine arbeitet jetzt als Master und die Waage als Slave. Wie bereits in Verbindung mit der Figur 3 beschrieben wurde, wird infolgedessen die Waagensoftware ebenfalls in eine entsprechende Routine gebracht, welche eine Änderung der Daten in den entsprechenden Speicherbereichen ermöglicht.

Im Schritt 129 wird auf ein entsprechendes Handshakesignal von der Waage gewartet mit - nicht in Figur 4 dargestellter - Fehlermeldung, wenn kein oder ein NACK-Signal übermittelt wurde. Wurde ein ACK-Signal übermittelt, wird auf den Schritt 130 verzweigt. Je nachdem, wie die Frankiermaschine konfiguriert worden ist, erfolgt nun eine Nachladung von Aktualisierungsdaten aus einem externen Speicher per MODEM 23 (Schritte 131 bis 135) oder per Chipkarten-Schreib/Leseeinheit 20 (Schritt 140). Anschließend wird auf den Initialisierungsschritt 121 zurückverzweigt. Die Frankiermaschine arbeitet jetzt wieder als Slave.

Nach den Überprüfungsschritten 122 bis 127 wird nun, da kein Laden weiterer Aktualisierungsdaten erforderlich ist, weiter im Normalmodus für das Postabfertigungssystem gearbeitet. Deshalb wird zur Systemroutine verzweigt, in welcher Eingabe- und andere Kriterien abgefragt werden. Hierbei kann außerdem eine automatische Überprüfung gemäß Schritt 126 vorgenommen werden, wenn die Datumseinstellung geändert wird, um künftige Post zu frankieren. Dann wird wieder der Abfrageschritt 127 erreicht, um zu verhindern, daß eine erst zukünftig zu versendende Post noch nach veralteten Tarifen frankiert werden kann.

Anschließend an den Aktualisierungsmodus für die Waage können auch weitere Chipkarten gelesen werden, wie dies bereits im EP 566 225 A2 vorgeschlagen wurde, um Daten in die Frankiermaschine zu laden. Es ist vorgesehen, daß mindestens ein erstes Übertragungsmittel 10 zu einer standortspezifischen Bereitstellung von Fensterdaten für den Poststempel bzw. Zusatzfunktionen für die Frankiermaschine und aktuellen Informationen für eine permanente und/oder temporäre Konfiguration von mindestens einer Waage und daß ein zweites Übertragungsmittel 13 zur benutzerindividuellen Einstellung der Frankiermaschine verwendet wird.

Es ist weiterhin vorgesehen, daß als erste und zweite Übertragungsmittel 10 und 13 eine integrierte Chipkarte ICCA und ICCB, die jeweils einen Speicher mit den abrufbaren Datenblöcken zur Nachladung von Aktualisierungsdaten in die Waage und/oder von Informationen und Zusatzfunktionen in die Frankiermaschine sowie von Aktualisierungsdaten in die Waage aufweisen, verwendet werden.

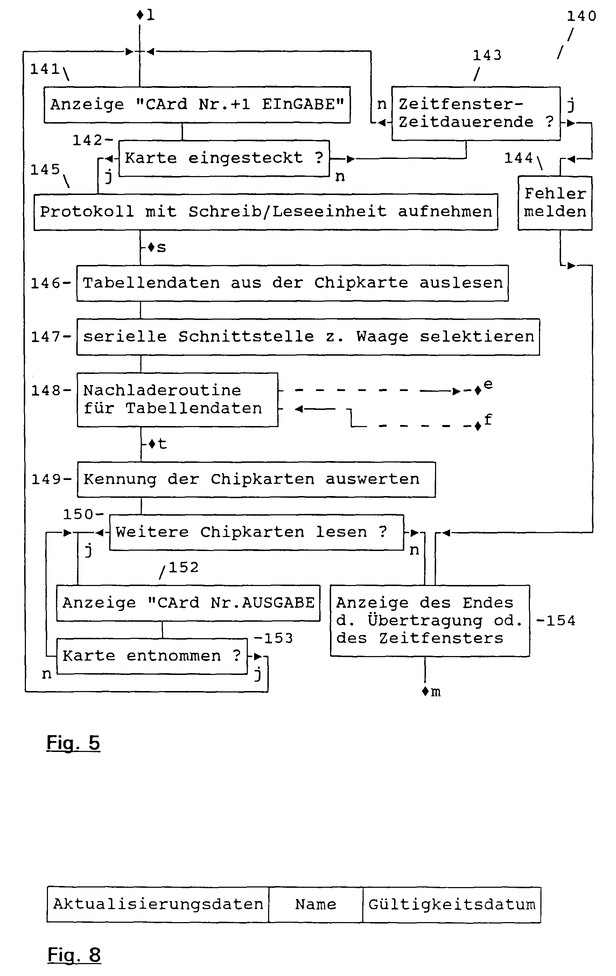

Die Figur 5 zeigt ein detailiertes Flußdiagramm zum Auslesen von Daten aus der Chipkarte gemäß dem - in der Figur 4 gezeigten - Schritt 140. Auf den Punkt 1 folgend wird zunächst im Schritt 141 die Karten-Kennummer derjenigen Chipkarte angezeigt, welche zuerst zur Aktualisierung in den Slot der Frankiermaschine eingesteckt werden muß. Im Schritt 142 wird nun geprüft, ob die entsprechende Chipkarte eingesteckt worden ist. Falls keine Karte gesteckt worden ist, wird über den Schritt 143 wieder zum Punkt l zurückverzweigt, wobei ein bestimmtes Zeitfenster zum Einstecken genutzt werden kann. Anderenfalls wird über den Schritt 144 zum Fehlermelden auf den Schritt 154 verzweigt, wobei eine Anzeige über das Erreichen des Zeitfenster-Endes zum Einstecken informiert wird, bevor der Punkt m und damit der nächste Schritt, bzw. gemäß Figur 4 der Punkt i erreicht wird. Das führt zur Wiederholung des bereits beschriebenen Ablaufes solange, bis die Aktualität der Daten hergestellt werden konnte. Bei rechtzeitig eingesteckter Karte wird im Schritt 145 das Protokoll mit der Schreib/Leseeinheit 20 der Frankiermaschine 1 aufgenommen, wie es bereits in der Figur 5 des EP 566 225 A2 prinzipiell beschrieben worden ist. Lediglich der Inhalt der aus der Chipkarte auszulesenden Datenblöcke ist verschieden und ist dazu bestimmt, in die Waage geladen zu werden.

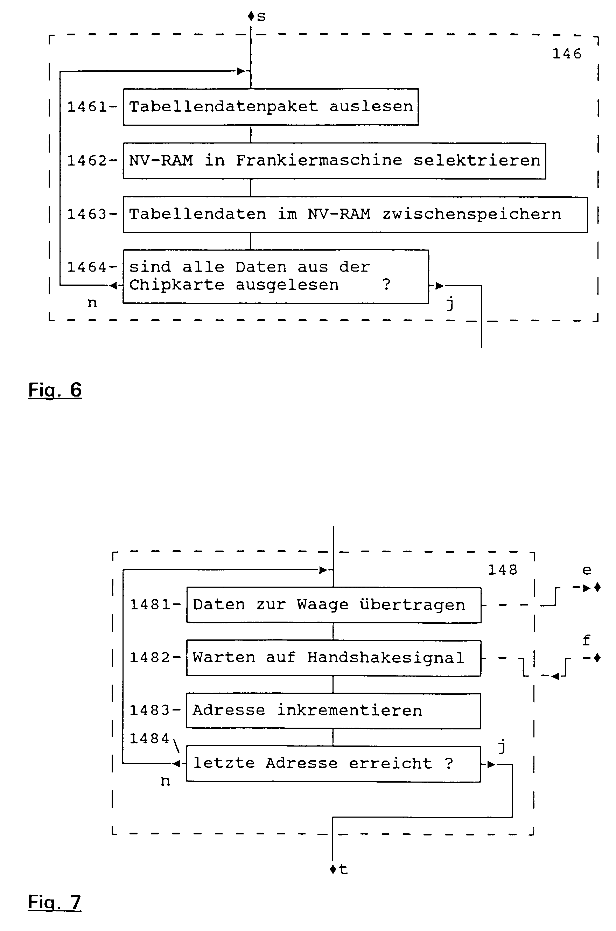

Mit diesen Datenblöcken hat im Schritt 146 die Frankiermaschine begonnen, Tabellendaten aus der Chipkarte auszulesen. Dieser vorgenannte Schritt 146 umfaßt weitere - in der Figur 6 näher erläuterte - Subschritte 1461 bis 1464 für die Routine zum Tabellendatenauslesen aus der Chipkarte.

Danach wird im Schritt 147 die serielle Schnittstelle zur Waage selektiert bevor der Schritt 148 mit der Nachladeroutine für Tabellendaten erreicht wird.

Die im Schritt 148 aufgerufene Nachladeroutine für die Frankiermaschine, um eine Datenübertragung zur Waage durchzuführen wird in der Figur 7 näher erläutert.

Im nachfolgenden - in der Figur 5 gezeigten - Schritt 149 wird die Kennung der Chipkarte daraufhin ausgewertet, um die nächste erforderliche Chipkarte zu ermitteln, welche in den Slot eingesteckt werden soll.
Nun kann im Schritt 150 von der Steuereinheit der Frankiermaschine entschieden werden, ob weitere Chipkarten gelesen werden müssen, um weitere Aktualisierungsdaten zu laden, oder ob mit Schritt 154 das Ende der Routine und damit der Punkt m erreicht ist.
Anderenfalls wird über den Anzeigeschritt 152 angezeigt, daß die Chipkarte der zugehörigen Nummer entnommen werden soll und im Prüfschritt 153 überprüft, ob die Chipkarte der zugehörigen Nummer entnommen wurde. Ist dies erfolgt, wird zum Punkt l zurückverzweigt, um im Anzeigeschritt 141 zum Einstecken der nächsten Chipkarte aufzufordern. Anderenfalls wird zum Anzeigeschritt 152 zurückverzweigt.

Gemäß der Figur 6 umfaßt die Routine zum Tabellendatenauslesen aus der Chipkarte den Subschritt 1461 zum Tabellendatenpaket auslesen, den Subschritt 1462 zum Selektieren des entsprechenden NV-RAMs 3 und/oder 9 in der Frankiermaschine, in welchen im folgenden Subschritt 1463 Tabellendaten zwischengespeichert werden sollen. Hierbei ist es möglich, wenig Daten zwischenzuspeichern, um diese im Schritt 148 sofort in die Waage zu übertragen. Falls dafür genügend Speicherkapazität vorhanden ist, können jedoch auch eine Vielzahl von zu übertragenden Daten zunächst einmal in der Frankiermaschine zwischengespeichert werden, welche erst dann weitergeleitet werden, wenn die Waage angeschlossen wird. Im letzteren Fall wird eine Abfrage im Subschritt 1464 vorgenommen, ob alle benötigten Daten aus der Chipkarte ausgelesen worden sind, um anderenfalls auf den Subschritt 1461 im Punkt s zurückzuverzweigen. Im ersteren Fall wird - in einer in der Figur 5 nicht gezeigten Weise - eine Abfrage im Subschritt 1464 nach dem Schritt 148 vor dem Punkt t vorgenommen, ob aus der Chipkarte alle zur Zeit erforderlichen Aktualisierungsdaten ausgelesen worden sind, um anderenfalls auf den Subschritt 1461 im Punkt s zurückzuverzweigen.

Sind Aktualisierungsdaten ausgelesen und wurde im Schritt 147 die serielle Schnittstelle zur Waage selektiert, wird die - in der Figur 7 gezeigte - Nachladeroutine 148 für die Frankiermaschine erreicht. Um eine Datenübertragung zur Waage durchzuführen wird zunächst ein Subschritt 1481 ausgeführt um anschließend im Subschritt 1482 auf ein Handshakesignal von der Waage zu warten. Dann wird im Subschritt 1483 die nächste Adresse, vorzugsweise durch inkrementieren, erzeugt, und im Subschritt 1484 geprüft, ob die letzte Adresse erreicht ist. Dann kann zum Punkt t verzweigt werden. Anderenfalls wird zum Subschritt 1481 zurückverzweigt. Die Routine ist für den vorgenannten letzteren Fall vorgesehen, kann aber ebenso auf den ersteren Fall angepaßt werden, in welchem weniger Adressen abgefragt werden müssen.

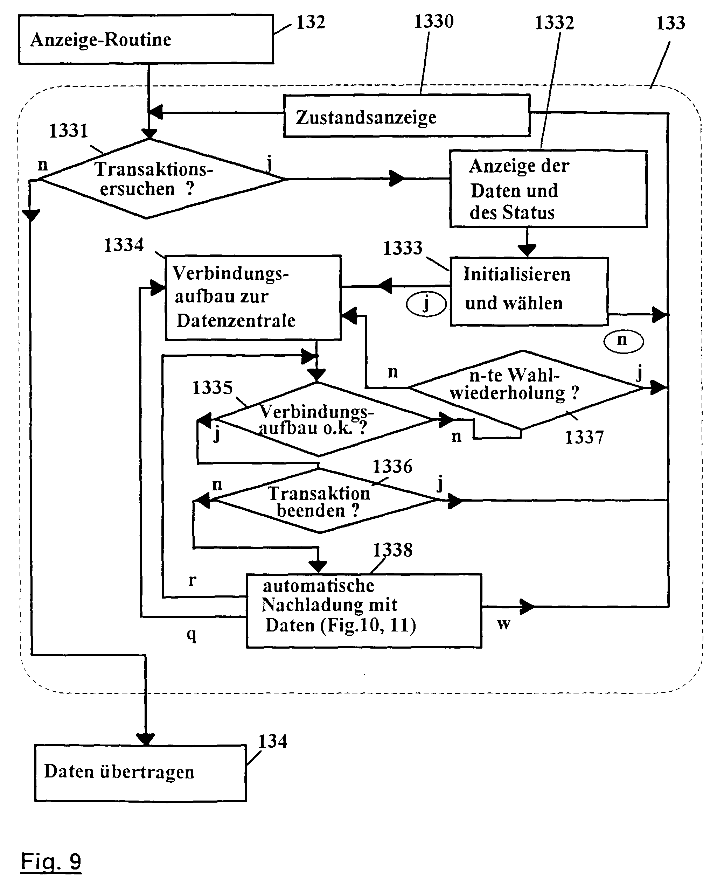

In der Figur 8 wird ein im externen Speichermittel gespeicherter Datenblock dargestellt. Ein solcher Datenblock umfaßt neben den eigentlichen Aktualisierungsdaten, den Namen für diesen Datenblock und das zugehörige Gültigkeitsdatum für das Inkrafttreten der Änderung. Der Name für einen solchen vorgenannten Datenblock schließt den Namen desjenigen Postbeförderes bzw. seine Carrier-Identifizierungs-Nummer CIN ein, der die Portogebührentabelle liefert. Die Aktualisierungsdaten umfassen einen zugehörigen Gültigkeitszeitraum bzw. ein Mindestgültigkeitsdatum, insbesondere bezüglich einer Portogebührentabelle.

Die Waage ist über eine Schnittstelle mit der Frankiermaschine verbunden. Ein automatisches Verändern des letzten Standes an gespeicherten Dateninhalten in einer Frankiermaschine zu deren Einstellung erfolgt innerhalb eines Zeitfensters nach dem Einschalten, wenn die das Verändern bewirkende Daten und/oder Flags aus einem externen Speicher in einen Speicherbereich des nichtflüchtigen Speichermittels 3, 9 der Frankiermaschine geladen werden. In Verbindung insbesondere mit einem Laden per MODEM umfaßt das Verfahren zur Dateneingabe in die Waage des Postabfertigungssystems weiterhin folgende Schritte:
I) Initialisieren von einer Frankiermaschine 1 und einer Waage 2, die über eine Schnittstelle und über ein Verbindungskabel 24 miteinander verbundenen sind, wobei die Waage 2 Mittel 25, 26, 27, 28, 29, 30 zur Portoberechnung, zur Übermittlung des Portobetrages im Normalmodus, zur Datenübermittlung von Überprüfungsdaten zur Frankiermaschine und zur Modusumschaltung aufweist,
II) automatisches Überprüfen des letzten Standes an in der Waage 2 gespeicherten Dateninhalten nach dem Einschalten des Postabfertigungssystems 1, 2 anhand von zur Frankiermaschine übermittelten Überprüfungsdaten mittels in der Frankiermaschine vorher eingespeicherten Informationen über die zukünftig vorzunehmende Änderung und des zugehörigen Gültigkeitdatums,
III) Standortspezifische Bereitstellung von Daten für mindestens die Waage 2 aus einem externen Speicher über ein Kommunikationsnetz, zur Nachladung von mindestens den Aktualisierungsdaten in die Waage 2,
IV) Aktualisierung der intern gespeicherten Daten nach Modusumschaltung, wobei in einem Schritt 134 Aktualisierungsdaten über die Frankiermaschine 1 zur Waage 2 übertragen werden.

Die Durchführung der Schritte I bis IV setzt eine mit der Waage verbundenen Frankiermaschine voraus, die ein entsprechend programmiertes Prozessorsystem (3,5,9,14, 100,101) aufweist. Ein Permanentspeicher, der Bestandteil der Speichermittel 3 der Frankiermaschine 1 ist, weist Programme für eine Kommunikation aus einem externen Speicher über Modem 23 bzw. Einheit 33 oder andere Einheiten 20 bzw. für eine Kommunikation über Schnittstellen 21, 22 mit extern angeschlossenen Geräten auf (Fig.2).

Die Anordnung schließt eine Verarbeitungseinheit (CPU) der Frankiermaschine 1 und angeschlossene Empfangsmittel 33, 23 bzw. 20 ein, wobei die Empfangsmittel 33, 23 bzw. 20 mit der ein erstes Schaltungs- bzw. Programm-Mittel 100 aufweisenden Verarbeitungseinheit (CPU) der Frankiermaschine 1 in kommunikativer Verbindung stehen, wobei die Verarbeitungseinheit (CPU) der Frankiermaschine 1 programmiert ist, um nach Inbetriebnahme bzw. nach dem Einschalten der Frankiermaschine 1 entsprechend den in die Frankiermaschine 1 eingegebenen gespeicherten mindestens zwei Bedingungen (Name und Datum) die Aktualisierungsdaten und/oder Informationen aus dem externen Speicher in den vorbestimmten Schreib/Lese-Speicher 3 und/oder 9 der Frankiermaschine 1 zu laden.

Die Verarbeitungseinheit (CPU) der Frankiermaschine 1 steht in operativer Verbindung mit speziellen zweiten Schaltungs- bzw. Programm-Mitteln 101 der Frankiermaschine 1 und ist programmiert:
(i) zur Überprüfung der durch die Steuereinrichtung 27, 26 der Waage 2 zur Frankiermaschine 1 übermittelten Überprüfungsdaten für die aktuellen in Kraft befindliche Tabellendaten der Waage 2 und/oder Überprüfung der Informationen, die in der Frankiermaschine 1 zur Verfügung stehen, um ggf. eine Modusumschaltung vorzunehmen, wenn ein Nachladeerfordernis festgestellt wird, und
(ii) zur Speicherung von Steuerdaten für die Übertragung von Aktualisierungsdaten zur Waage 2 im Schreib/Lese-Speicher 3 und/oder im Uhren/Datumsbaustein 9 der Frankiermaschine 1.

Der Prozessor 27 der Waage 2 ist mit einem I/O-Port 26, mit Sicherheitsmitteln 31 gegen unbefugtes Löschen von Datenblöcken im Speichermittel 30 für Aktualisierungsdaten sowie mit Speichermitteln 29, 30 zur Aktualisierung ihres Speicherinhaltes mittels den vorgenannten Aktualisierungsdaten schaltungsmäßig verbunden. Der Prozessor 27 der Waage 2 ist unter operativer Steuerung der im Speichermittel 28 gespeicherten Betriebssoftware programmiert:
- zur standortspezifischen Initialisierung der Waage,
- zur Übermittlung eines berechneten Portos,
- zur Datenübermittlung von Überprüfungsdaten zur Frankiermaschine,
- zur Modusumschaltung und zur Aktualisierung der entsprechenden in Speichermitteln 29, 30 gespeicherten Daten.

Zur standortspezifischen Initialisierung der Waage in Verbindung mit Modem- und Mobilfunkdiensten, welche eine Standortbestimmung von der Datenzentrale kurzfristig vorzunehmen erlauben, werden automatisch in der Waage 2 in einem Schritt 221 (Fig.3) Daten gebildet und zur Frankiermaschine übertragen (im Schritt 223, Fig.3), welche dort als ein Nachladeerfordernis gewertet werden (im Schritt 126, Fig.4). Beispielsweise können die Daten für ein solches Nachladeerfordernis durch Überschreiben mit einem vorbestimmten Datenwert oder durch Löschung der Namen für Land, Region oder Ort in einem Subschritt 2210 zum Schritt 221 gebildet werden.
Die Daten, die eine Standortveränderung betreffen und zuvor von der Datenzentrale genehmigt werden sollen, können natürlich den Empfänger nur dann erreichen, wenn dessen Telefonnummer vor Ort stimmt. In einer Variante ist die Frankiermaschine so programmiert, um die Rufnummer ihres Anschlusses zur Datenzentrale zu übermitteln. In einer anderen Variante wird die Standortbestimmung von einen Telekommunikationsdienst unterstüzt.

Telefon- und Mobilfunkdienste erlauben eine Standortbestimmung von der Datenzentrale kurzfristig während eines einzigen Anrufes vorzunehmen, wenn die Frankiermaschine die Datenzentrale anruft und dabei Daten von der örtlich zuständigen Vermittlungsstelle zwischen die Wählsignale eingefügt werden, welche den rufenden Anschluß eindeutig identifizieren. Ein in der Datenzentrale eingesetztes analoges MODEM ist entsprechend programmiert, solche lokalen Identifizierungsdaten auszufiltern. Dazu ist es erforderlich, daß die Wählsignale zur Datenzentrale im Mehrfrequenz-Wahlverfahren (MFV) übermittelt werden.

Beim Einsatz eines digitalen MODEMs, insbesondere eines ISDN-MODEMs kann vorteilhaft das ISDN-Dienstmerkmal "Identifizieren des rufenden Anschlusses" genutzt werden, an welchen die Frankiermaschine angeschlossen ist. Von der Telefon-Vermittlungsstelle, dem der Anschluß zugeordnet ist, wird der Teil der Rufnummer erzeugt, der den Anschluß eindeutig identifiziert.

Bei einer Ortseingabe über Chipkarte muß zuvor eine Genehmigung eingeholt werden. Das ist zwar zeitaufwendiger, aber erlaubt in der Datenzentrale ebenfalls eine Standortregistrierung für das jeweilige Postabfertigungssystem. Das standortspezifische Bereitstellen von Daten erfolgt wahlweise mittels einem kartenförmigen Übertragungsmittel oder mittels externer Speicher durch ein Kommunikationsnetz (Modem, Mobilfunk), entsprechend des vorhanden Frankiermaschinentyps.

In einer anderen Variante wird statt mittels Datenfernübertragung oder statt Chipkarte nun eine Eingabe des Standortes beispielsweise mittels Waage-Tastatur vorgenommen. Die Waage 2 wird beispielsweise nach einem Ortwechsel von einem neuen Benutzer eingeschaltet. Eine solche Eingabemöglichkeit besteht nach dem Einschalten in einem Subschritt 2210 zum Schritt 221 der Initialisierung der Waage 2, durch Eingabe der Postleitzahl PLZ in die Waage 2. Nach Eingabe der letzten Ziffer (PLZ in Deutschland ist 5-stellig) bzw. Ziffern (der einzugebende Teil des 8-stelligen Zipcodes in den USA ist 3-stellig) wird die Eingabe automatisch übernommen. Unabhängig davon kann nach einer derartigen Initialisierung eine Aktualisierung unter Steuerung durch die Frankiermaschine über ein Kommunikationsnetz oder Übertragungsmittel durchgeführt werden, wobei eine standortspezifische Bereitstellung von Daten für die Waage und die Frankiermaschine in einem externen Speicher erfolgt.

Einerseits kann also die Waage vor einem Speichern von Anwendungsdaten für den jeweiligen Standort initialisiert werden und andererseits muß auch in die Frankiermaschine ein genehmigter Textteil für den Standort im Poststempel geladen werden, wenn ein Standortwechsel vorgenommen wird. Beides erfordert eine Datenübermittelung von Überprüfungsdaten zur Frankiermaschine, damit in letzterer das Vorliegen eines Aktualisierungsbzw. Nachladeerfordernis festgestellt wird.

Es ist vorgesehen, daß durch die Verarbeitungseinheit (CPU) der Frankiermaschine ein Nachladeerfordernis festgestellt wird, anhand der im Schreib/Lese-Speicher 3 bereitgestellten und/oder durch einen Uhren/Datumsbaustein 9 der Frankiermaschine vorgegebenen Bedingungen (Name und Gültigkeitsdatum bzw. Datumseinstellung). Weiterhin ist vorgesehen, daß die Aktualisierungsdaten oder Informationen für die Frankiermaschine 1 und die Waage 2 als Datenblöcke im Übertragungsmittel 10 bzw. in einem extern von der Frankiermaschine angeordneten Speicher an vorbestimmte Bedingungen geknüpft gespeichert abrufbar vorliegen.

Das bereits erläuterte, in der Figur 4 dargestellte, Flußdiagramm einer Dateneingabe für die Frankiermaschine wird für ein Laden per MODEM detaillierter ausgeführt. Erreicht im Schritt 129 ein entsprechendes Handshakesignal (ACK-Signal) die Frankiermaschine, wird auf den Schritt 130 verzweigt. Die Frankiermaschine ist bespielsweise werksmäßig so konfiguriert worden, daß eine Nachladung von Aktualisierungsdaten aus einem externen Speicher per MODEM 23 (Schritte 131 bis 135) erfolgt.

Ein im Schritt 126 (Fig.4) von der Frankiermaschine festgestelltes Nachladeerfordernis, wobei die vorgenannten vorgegebenen Bedingungen (Name und Gültigkeitsdatum bzw. Datumseinstellung) vorher durch vorgenannte Empfangsmittel 33, 23 bzw. 20 in Verbindung mit der Verarbeitungseinheit (CPU) und dem ersten Schaltungs- bzw. Programm-Mittel 100 der Frankiermaschine 1 und durch Eingabemittel 8 der Frankiermaschine 1 oder durch Eingabemittel 42 und durch die Steuereinrichtung 27, 26 der Waage 2 über Schnittstellen zur Frankiermaschine 1 übermittelt und im Schreib/Lese-Speicher 3 bereitgestellt werden, wird als Transaktionsersuchen im Schritt 133 gewertet.

In der Figur 9 ist ein Teilflußdiagramm gezeigt, welches in der Frankiermaschine zum Zwecke einer automatischen Kommunikation per MODEM abläuft. Ein erkanntes Transaktionsersuchen im Subschritt 1331 des Schrittes 133 führt zur Anzeige der Daten und des Status im Subschritt 1332, um anschließend nach einem Initialisieren des Modems und Anwählen der Datenzentrale (Telefonnummer) im Subschritt 1333 auf einen Subschritt 1334 zur Herstellung des Verbindungsaufbaues zur Datenzentrale zu verweigen. Kann ein Initialisieren des Modems und Anwählen im Subschritt 1333 nicht erfolgreich durchgeführt werden, wird über einen Subschritt 1330 zur Anzeige des Zustandes auf Subschritt 1331 zurückverzweigt. Ebenfalls wird dann auf den Subschritt 1331 zurückverzweigt, wenn in einem nach dem Subschritt 1334 gelegenen Subschritt 1335 festgestellt wird, daß der Verbindungsaufbau nicht ordnungsgemäß erfolgt und im Subschritt 1337 festgestellt wird, daß die Verbindung auch nach n-ter Wahlwiederholung nicht hergestellt werden kann.

Ist aber der Verbindungsaufbau ordnungsgemäß erfolgt und im Subschritt 1336 wird festgestellt, das eine der Transaktionen noch nicht beendet wurde, beginnt eine automatische Nachladung mit Daten im Subschritt 1338.

Im Subschritt 1338 wird festgestellt, ob ein Fehlerzustand aufgetreten ist, der durch einen erneuten Verbindungsaufbau zur Datenzentrale behebbar ist, um über q zum Subschritt 1334 zurückzuverzweigen. Im Subschritt 1338 wird weiterhin festgestellt, ob ein Fehlerzustand aufgetreten ist, nicht behebbar ist, um über w zwecks Zustandsanzeige zum Subschritt 1330 zurückzuverzweigen. Ist eine Transaktion durchgeführt worden, können weitere Transaktionen durchgeführt werden, wobei über r zum Subschritt 1335 zurückzuverzweigt wird. Ist die Verbindung noch intakt, wird im Subschritt 1336 geprüft, ob alle Transaktionen durchgeführt bzw. letzte Transaktion beendet wurde, um dann über den Subschritt 1330 zum Subschritt 1331 zurückzuverzweigen. Das Flag für ein Transaktionsersuchen wird im Subschritt 1338 mit der beendeten letzten Transaktion zurückgesetzt. Somit wird vom Subschritt 1331 zum Schritt 134 verzweigt, um ausgewählte zur Frankiermaschine übermittelte Daten nun zur Waage zu übertragen.

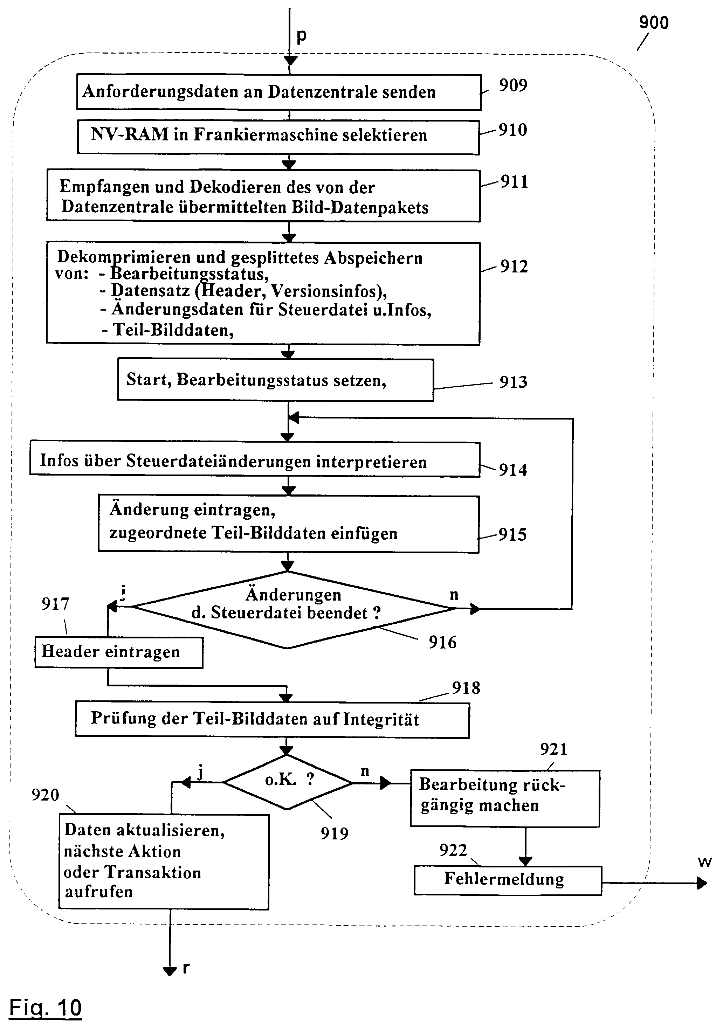

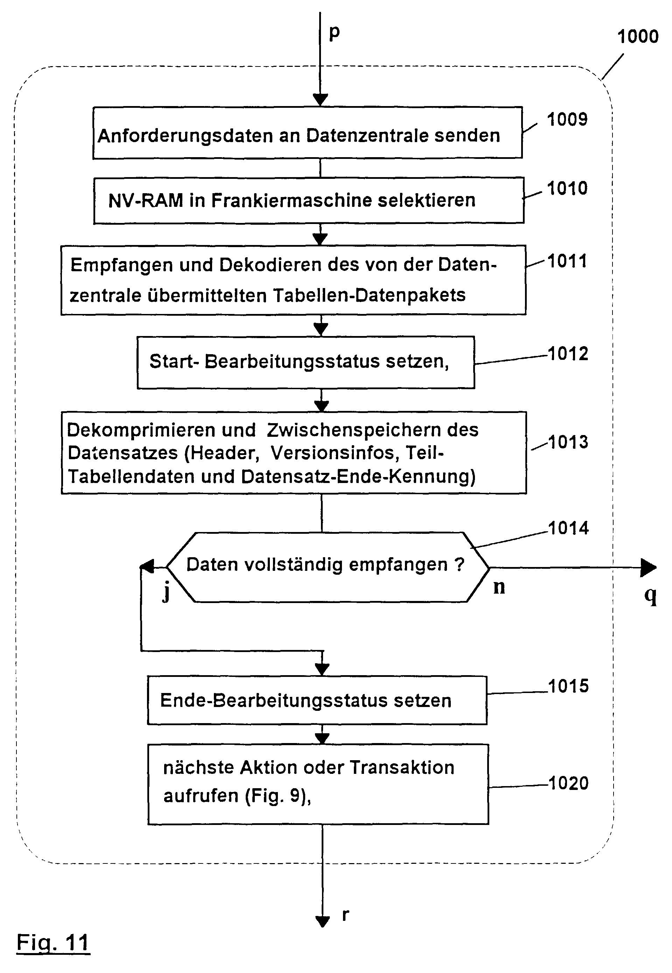

Die automatische Nachladung mit Daten im Subschritt 1338 schließt spezielle Behandlungroutinen ein, welche in Verbindung mit den Figuren 10 und 11 näher erläutert werden. Das Verfahren liefert einerseits eine Standortspezifische Bereitstellung von Fensterdaten für den Poststempel bzw. von Zusatzfunktionen für die Frankiermaschine und andererseits aktuelle Informationen für eine permanente und/oder temporäre Konfiguration von mindestens der Waage 2 durch ein Kommunikationsnetz, das einen Speicher mit den abrufbaren Datenblöcken zur Nachladung von Zusatzfunktionen und Informationen in die Frankiermaschine sowie von Aktualisierungsdaten in die Waage enthält.

Die Figur 10 zeigt eine Routine zum Einbinden übermittelter Teilbilddaten in Bilddaten, wobei letztere in der Frankiermaschine gespeichert vorliegen. Die Routine ermöglicht eine standortspezifische Bereitstellung von Fensterdaten für den Poststempel zwecks Abdruck auf einem Poststück durch die Frankiermaschine.

In der Figur 11 ist eine Routine zum Behandeln übermittelter Tabellendaten in der Frankiermaschine dargestellt, welche anschließend zur Waage übertragen werden (im Schritt 134).

Beide Routinen 900 nach Figur 10 bzw. 1000 nach Figur 11 umfassen einen Subschritt 909 bzw. 1009 zum Senden von Anforderungsdaten an die Datenzentrale.

Die Anforderungsdaten werden bereits im Schritt 126 (Fig.4) gebildet, wenn ein Aktualisierungserfordernis vorliegt. Nach dem Subschritt 1336 wird für den Subschritt 1338 (Fig.9) der Punkt p erreicht, wenn eine der Transaktionen noch nicht beendet ist. Die Routine 900 zum Einbinden übermittelter Teilbilddaten in Bilddaten gemäß Figur 10 führt nach dem Subschritt 909 zum Senden von Anforderungsdaten an die Datenzentrale einen Subschritt 910 aus, um einen nichtflüchtigen Speicherbereich in der Frankiermaschine zu selektieren, in welchen die angeforderten Daten später zwischengespeichert werden können. Nach dem Subschritt 910 wird über den Subschritt 911 zum Empfangen und Dekodieren des von der Datenzentrale übermittelten Datenpaketes auf einen Subschritt 912 zu verzweigen, in welchem eine erste Bearbeitung der Daten erfolgt. Insbesondere bei hohen Übertragungsraten, wie sie beispielsweise ISDN-MODEMs gestatten, erfolgt zunächst ein Zwischenspeichern und ggf. ein anschließendes Dekomprimieren bei gepakten Daten. Nun kann ein gesplittetes Abspeichern von Datenteilen erfolgen, welche betreffen: Bearbeitungsstatus, Datensatz (Header, Versionsinformation), Änderungsdaten für eine Steuerdatei und für Informationen sowie Teilbilddaten, welche zur Erzeugung eines vollständigen Pixelbildes benötigt werden. Dannach wird ein Subschritt 913 zum Start erreicht bzw. um eine Kennung für den Bearbeitungsstatus zu setzen. Letzteres ist erforderlich um auch bei Programmabbruch beispielsweise infolge von einer Betriebsspannungsunterbrechung den erreichten Programmzustand nichtflüchtig zu konservieren, um das Programm an diesem Punkt nach Spannungswiederkehr fortzusetzen. Im nachfolgenden Subschritt 914 werden dann die Informationen über eine Steuerdateiänderung interpretiert, um anschließend im Subschritt 915 die erforderlichen Änderungen durchzuführen und die zugeordneten Teilbilddaten einzufügen. Die Änderungsdaten der Steuerdatei und die Teilbilddaten werden eingetragen und nichtflüchtig gespeichert. Im folgenden Abfrageschritt 916 wird überprüft, ob die Durchführung der Änderung beendet ist oder ob weitere Änderungen der Steuerdatei noch vorgenommen werden müssen. Ist die Änderung beendet, wird auf den Subschritt 917 verzweigt, um den Datensatz einzutragen. Anderenfalls wird auf den Subschritt 914 zurück verzweigt, um weitere Änderungen vorzunehmen.

Wurde im Subschritt 917 der Datensatz eingetragen, kann im Subschritt 918 eine Prüfung der Teilbilddaten auf Integrität erfolgen. In einem Teil des Speicherbereiches bleibt zunächst der ungeänderte Bildteil erhalten, um auf diesen gegebenenfalls zurückgreifen zu können, falls die Integrität der Daten nicht gegeben ist oder falls ein Spannungsausfall eintritt. Hierbei wird eine vom erreichten Bearbeitungsstatus abhängige Zustandskennung ausgewertet, wie dies beispielsweise in der EP 572 019 A2 beschrieben wurde. Zur Gewährleistung der Gültigkeit der Teilbilddaten kann eine verschlüsselte Prüfsummenabsicherung, wie beispielsweise Message Authentification Code (MAC), angewendet werden, was ausführlich in der US-Anmeldung, Method for improving the security of postage meter machines (Aktenzeichen 08/525,923), für Klischebilddaten beschrieben wurde.

Im Abfrageschritt 919 wird dann entschieden, ob bei einem Vorhandensein der Integrität der Daten auf den Subschritt 920, oder ob bei einem Nichtvorhandensein der Integrität der Daten auf den Subschritt 921 verzweigt wird. Im Subschritt 921 wird die Bearbeitung rückgängig gemacht, wobei auf die ungeänderten Teilbilddaten zurückgegriffen und nach Fehlermeldung im Subschritt 922 auf den Punkt w verzweigt wird. Bei ordnungsgemäßen Ablauf und Integrität der Daten wird im Subschritt 920 eine nichtflüchtig gespeicherte Aktualisierung der Daten vorgenommen, wobei die ungeänderten Teilbilddaten enthaltenen Speicherbereiche überschrieben werden. Dann wird die nächste Aktion bzw. Transaktion aufgerufen sowie zum Punkt r verzweigt, wobei über die Abfrageschritte 1335 und 1336 gemäß Figur 9 zum Punkt p des Schrittes 1000 verzweigt wird. Anderenfalls, wenn keine nächste Aktion bzw. Transaktion erforderlich ist, wird zum Punkt r verzweigt und über die Abfrageschritte 1335 und 1336 die Zustandsanzeige im Subschritt 1330 gemäß Figur 9 erreicht.

Die in der Figur 11 gezeigte Routine 1000 zum Behandeln übermittelter Tabellendaten in der Frankiermaschine weist einen Subschritt 1009 zum Senden von Anforderungsdaten an die Datenzentrale auf. Dann wird ein Subschritt 1010 ausgeführt, um einen nichtflüchtigen Speicherbereich in der Frankiermaschine zu selektieren, in welchen die angeforderten Daten später zwischengespeichert werden können. Nach dem Subschritt 1010 wird über den Subschritt 1011 zum Empfangen und Dekodieren des von der Datenzentrale übermittelten Datenpaketes auf einen Subschritt 1012 verzweigt, in welchem ein Start-Bearbeitungsstatus für eine Datenbearbeitung gesetzt wird. Die erste Bearbeitung der Daten erfolgt dann im Subschritt 1013. Nach Zwischenspeicherung und gegebenenfalls nach einem anschließenden Dekomprimieren bei gepakten Daten erfolgt ein Abspeichern des Datensatzes, welcher zu einem vollständigen Portogebührensatz eines Postbeförderers gehört. Ein solcher Datensatz umfaßt einen Header, Versionsinformationen, Teiltabellendaten und eine Datensatz-Ende-Kennung (DEK). Dannach wird ein Subschritt 1014 zur Überprüfung auf vollständigen Empfang des übermittelten Datenpaketes erreicht. Bei Vollständigkeit wird auf einen Subschritt 1015 verzweigt, um eine Ende-Kennung als Bearbeitungsstatus zu setzen. Solche Kennungen sind erforderlich, um auch bei Programmabbruch, beispielsweise infolge von einer Betriebsspannungsunterbrechung, das Programm an diesem Punkt nach Spannungswiederkehr fortzusetzen. Im nachfolgenden Subschritt 1020 wird die nächste Transaktion bzw. Aktion aufgerufen und somit zur weiteren Ausführung des in der Figur 9 gezeigten Ablaufes verzweigt, um in einem später folgenden Schritt 134 die zwischengespeicherten Aktualisierungsdaten zur Waage zu übertragen.

Bei einem nicht ordnungsgemäßen Verlauf, welcher im Subschritt 1014 festgestellt wird, wird der Punkt q ereicht. Durch Verzeigung zum Subschritt 13331 gemäß Figur 9 kann ein weiterer Versuch gestartet werden, um die erforderlichen Teiltabellendaten zu übertragen. Dabei werden die Subschritte 1335 bis 1336 durchlaufen und dann der Punkt p gemäß Figur 11 erreicht.

Nach einer ersten Datenübertragung zur Frankiermaschine im Schritt 223 (Fig.3) über die Verbindung a wird nach Empfang der Daten (Schritt 123 in Fig.4) bei erfolgter Datenübertragung (Schritt 124) ein Handshakesignal gesendet (Schritt 125) bevor zum Auswerten der Daten und Bilden von Anfordungsdaten der Schritt 126 (Fig.4) erreicht wird. Der Empfang des Handshakesignals führt in der Waage 2 zur Modusumschaltung in Schritt 227. Zur Vorbereitung der Aktualisierung wird vom Prozessor 27 außerdem die gespeicherte letzte Carrier-Einstellung abgefragt, um die Startadresse im Flash-EEPROM der Waage zu ermitteln (Schritt 230, Fig. 3).

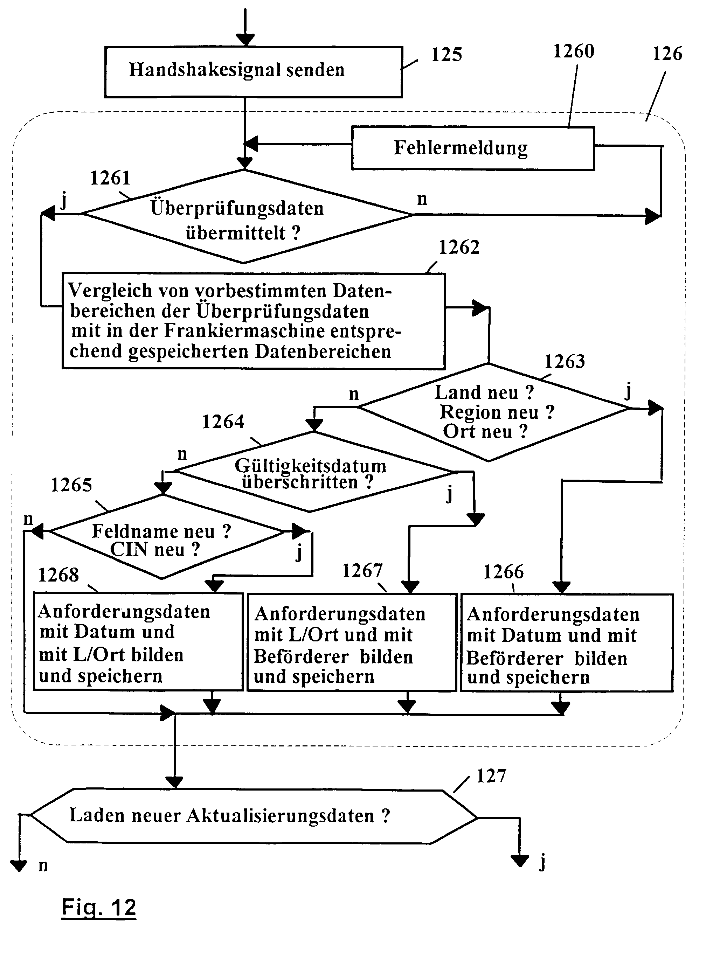

Mittels der Figur 12 wird die Routine 126 zur Auswertung von übermittelten Überprüfungsdaten und zur Bildung von Anforderungsdaten in der Frankiermaschine näher erläutert.

Im Subschritt 1261 wird festgestellt, daß Überprüfungsdaten von der Waage zur Frankiermaschine übermittelt wurden. Anderenfalls bei Nichtübermittlung wird über einen Subschritt 1260 zur Fehlermeldung auf den Anfang zurück verzweigt.

Im Subschritt 1262 erfolgt ein Vergleich von vorbestimmten Datenbereichen der Überprüfungsdaten mit nichtflüchtig gespeicherten entsprechenden vorbestimmten Vergleichsdatenbereichen, um eingetretene bzw. eingegebene Änderungen feststellen zu können. In den nachfolgenden Subschritten 1263 bis 1265 erfolgen spezifische Abfragen, um spezifische Anforderungsdaten in den zugehörigen Subschritten 1266 bis 1268 zu bilden. Wurde der Standort verändert, wobei das Land, die Region und/oder der Ort neu eingegeben wurde, wird vom Subschritt 1263 auf den Subschritt 1266 verzweigt, um Anforderungsdaten zusammen mit dem aktuellen Datum und Beförderer zu bilden und zu speichern. Im Subschritt 1264 wird das Überschreiten des Gültigkeitsdatums überprüft, welches jeder befördererspezifischen Tabelle zugeordnet ist, um dann Anforderungsdaten zusammen mit dem aktuellen Standort und Beförderer zu bilden und zu speichern. Im Subschritt 1265 wird eine Neueingabe eines Feldnamen ausgewertet, womit Tabellen und Informationen spezifisch gekennzeichnet sind, bevor zum Subschritt 1268 verzweigt wird, um Anforderungsdaten spezifisch zu bilden und zu speichern. Nur wenn keine Änderungen in den Abfragen 1263 bis 1265 detektiert werden, wird direkt zum nächsten Schritt 127 verzweigt.

Es ist vorgesehen, daß die Verarbeitungseinheit (CPU) der Frankiermaschine 1 durch im Speichermittel 3 und/ oder 9 der Frankiermaschine gespeichert vorliegende Steuerdaten und durch vorgenannte zweite Schaltungs-bzw. Programm-Mittel 101 programmiert ist:
- zum Ermitteln der aktuellen in Kraft befindlichen Umwandlungs- bzw. Portogebührentabelle anhand der zuvor aus dem externen Speicher geladenen bzw. über Übertragungsmittel 10 und/oder Eingabemittel 8 der Frankiermaschine 1 oder Eingabemittel 42 der Waage 2 eingegebenen und durch Speichermittel 3 zwischengespeicherten Anforderungsdaten betreffend Absendeland bzw. Standort und betreffend des von im Speichermittel 9 der Frankiermaschine bereitgestellten Datums,
- zum automatischen Überprüfen des letzten Standes an in der Waage gespeicherten Dateninhalten anhand von zur Frankiermaschine übermittelten Überprüfungsdaten in der Frankiermaschine mittels vorher eingespeicherter Informationen über die zukünftig vorzunehmende Änderung und des zugehörigen Gültigkeitdatums,
- zur Modusumschaltung im Falle eines Nachladeerfordernisses,
- zur Übertragung zur Frankiermaschine von im externen Speicher bzw. im Übertragungsmittel 10 gespeichert vorliegenden Datensätzen entsprechend eingegebenen Absendelandes bzw. Standortes und des Datums,
- zur Übertragung zur Waage von im Speichermittel 3 und/oder 9 der Frankiermaschine zwischengespeichert vorliegenden Datensätzen über die Schnittstelleneinrichtungen 22, 25, um in der Waage 2 mittels einer Nachladeroutine den Dateninhalt im Speichermittel 30 für die Aktualisierungsdaten der Waage 2 mit neuen Aktualisierungsdaten zu aktualisieren, wobei das Speichermittel 30 für die Aktualisierungsdaten der Waage mindestens Speicherbereiche für die Portogebührentabellen, für Umwandlungstabellen und für den genehmigten Standort aufweist, und wobei das Aktualisieren innerhalb eines Zeitfensters nach dem Einschalten erfolgt, sowie
- zur Speicherung von neuen Steuerdaten für die Übertragung von Aktualisierungsdaten zur Waage 2 im Schreib/Lese-Speicher 3 der Frankiermaschine 1.

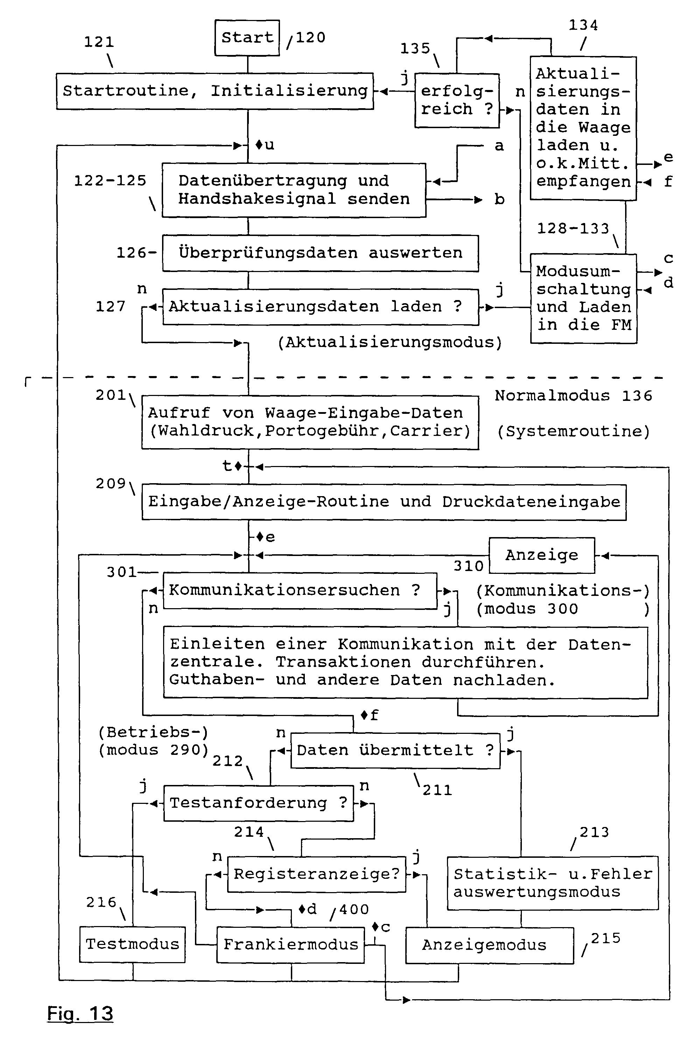

In der Figur 13 ist ein Gesamtablaufplan für die Frankiermaschine mit Aktualisierungsmodus und mit Normalmodus dargestellt. Im Aktualisierungsmodus laufen Schritte 120 bis 135 ab, wie dies bereits in Verbindung mit Figur 4 erläutert wurde. Im Schritt 126 zur Auswertung von Überprüfungsdaten laufen die anhand der Figur 12 erläuterten Subschritte 1260 bis 1268 ab bevor zum Abfrageschritt 127 verzweigt wird. Wurden im Schritt 126 Anforderungsdaten gebildet, dann sind neue Aktualisierungsdaten zu laden und vom Abfrageschritt 127 wird auf Schritte 128 bis 133 verzweigt, um eine Modusumschaltung der Frankiermaschine in den Master-Zustand vorzunehmen und entsprechend den Anforderungsdaten die benötigten Aktualisierungsdaten in die Frankiermaschine zu laden. Im nachfolgenden Schritt 134 erfolgt ein Übertragen derjenigen Aktualisierungsdaten zur Waage 2, welche von der Waage benötigt werden. Eine erfolgreiche Aktualisierung der in der Waage 2 gespeicherten Daten wird im Schritt 135 festgestellt und dann zur Initialisierungsroutine zurückverzweigt, wobei die Modusumschaltung rückgängig gemacht wird. In den Schritten 122 bis 127 befindet sich die Frankiermaschine wieder im Slave-Zustand.

Die Waage-Eingabe-Daten, welche im Schritt 123 zur Frankiermaschine übertragen wurden, werden nun im Schritt 201 aufgerufen. Die übermittelten Waage-Eingabe-Daten betreffen Wahldruck, Carrier-Identifikations-Nummer CIN, ggf. die Mindestgültigkeitsdauer der zur CIN zugehörigen Portogebührentabelle und die ermittelte Portogebühr für ein gewogenes Poststück sowie eventuell der gemessene Gewichtswert. Wenn die Mindestgültigkeitsdauer der zur CIN zugehörigen Portogebührentabelle in der Frankiermaschine der CIN zugeordnet gespeichert vorliegt, braucht die Mindestgültigkeitsdauer nicht von der Waage übermittelt werden. Nach einer Übermittlung der ausgewählten CIN von der Waage 2 zur Frankiermaschine 1, wird eine in den Speichermitteln 3 oder 9 realisierte aktualisierbare Zuordnungstabelle aufgerufen, um die Mindestgültigkeitsdauer bzw. den Gültigkeitzeitraum festzustellen, welche im Schritt 126 durch Vergleich mit dem aktuell eingestellten bzw. im Uhren/Datumsbaustein 9 nichtflüchtig gespeichert vorliegenden Datum ausgewertet werden.

Nach erfolgter Abfrage im Schritt 127, wobei keine Aktualisierungsdaten zu laden sind wird Normalmodus 136 erreicht und die Frankiermaschine befindet sich weiter im Slave-Zustand. Im Schritt 209 können mittels der Eingabemittel der Frankiermaschine die Daten überschrieben bzw. verändert oder andere Eingaben getätigt und angezeigt werden. Außerdem erfolgt eine automatische Druckdateneingabe mit gesicherten Daten zur Vorbereitung des Ausdruckens, wie dies in der US-Anmeldung 08/525,923 (Method for improving the security of postage meter machines) näher beschrieben worden ist. Nach dem Schritt 209 wird der Punkt e, d.h. der Beginn eines Kommunikationsmodus 300 erreicht und in einem Schritt 301 abgefragt, ob ein Transaktionsersuchen vorliegt. Ist das nicht der Fall, wird der Kommunikationsmodus 300 verlassen und der Punkt f, d.h. der Betriebsmodus 290 erreicht. Wurden relevante Daten im Kommunikationsmodus übermittelt, dann ist zur Datenauswertung auf den Schritt 213 zu verzweigen. Im Schritt 213 wird eine Statistik- und Fehlerauswertung durchgeführt, um weitere aktuelle Daten zu gewinnen, welche nach Verzweigung zur Systemroutine 200 im Schritt 201 ebenfalls aufrufbar sind. Oder anderenfalls, wenn im Schritt 211 die Nichtübermittlung festgestellt wird, ist auf den Schritt 212 zu verzweigen.

Nun wird überprüft, ob entsprechende Eingaben getätigt worden sind, um bei Testanforderung 212 in den Testmodus 216, anderenfalls um bei beabsichtigter Registerstandüberprüfung 214 in einen Anzeigemodus 215 zu gelangen. Ist das nicht der Fall, wird automatisch der Punkt d, d.h. der Frankier-modus 400 erreicht. Vom Frankiermodus 400 wird dann zum Punkt e verzweigt, wenn der Stückzahlkredit verbraucht ist und eine Kommunikation mit der Datenzentrale aufgenommen werden muß, um weiter frankieren zu können. Vom Frankiermodus 400 wird zum Punkt f verzweigt, um im Schritt 209 eine Dateneingabe mittels der Frankiermaschinentastatur solange zu ermöglichen, wie noch kein Signal zur Druckausgabeanforderung erzeugt wurde. Wurde aber ein Poststück erkannt, die Druckausgabeanforderung erzeugt und ein Frankieren durchgeführt, dann wird zum Punkt u zurückverzweigt.

Durch vorgenannte Zurückverzweigung können vor jedem Frankieren die im Schritt 123 von der Waage 2 zur Frankiermaschine 1 übermittelten Überprüfungsdaten im Schritt 126 daraufhin ausgewertet werden, ob eine Aktualisierung der in der Waage bzw. Frankiermaschine gespeicherten Daten erforderlich ist.

Der Normalmodus 240 der Waage 2 wird gemäß Figur 3 erreicht, wenn im vorbestimmten Zeitintervall keine Modusumschaltung seitens der Frankiermaschine signalisiert worden ist. Nach dem ergebnislosen temporär limitierten Warten der Waage 2 auf eine entsprechende Mitteilung im Schritt 226 wird das Zeitintervallende im Abfrageschritt 227 festgestellt und zum Normalmodus 240 der Waage 2 verzweigt.

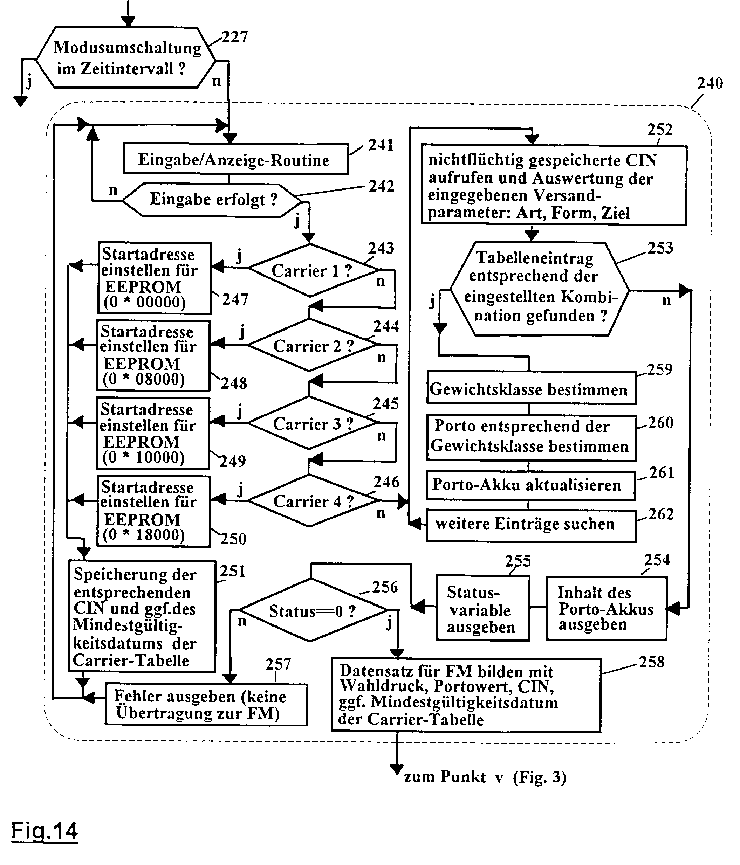

In der Figur 14 ist ein Ablaufplan für die Waage im Normalmodus 240 in detailierter Form dargestellt.
Der Normalmodus 240 umfaßt Subschritte 243 bis 246 bezüglich einer Abfrage einer Tastenbetätigung, welche im Subschritt 241 vorgenommen wurde. Im Subschritt 242 wird ermittelt, ob eine Tasteneingabe getätigt wurde, bevor zum Subschritt 243 verzweigt wird. Erfindungsgemäß erfolgt im Subschritt 243, 244, 245 oder 246 die Abfrage einer vorbestimmten Taste, welcher bei der Initialisierung der Waage im Schritt 221 ein spezieller Postbeförderer zugeordnet wurde. In den Subschritten 247 bis 250 erfolgt eine entsprechende Zuweisung einer Startadresse in Abhängigkeit der Betätigung einer vorbestimmten Taste. Im Ausführungsbeispiel wurde eine Auswahlmöglichkeit zwischen vier örtlich verfügbaren Postbeförderern geschaffen. Jedoch ist auch eine Variante mit nur einem örtlich verfügbaren Postbeförderer realisierbar. In letzteren Fall, wenn keine Auswahlmöglichkeit besteht, entfallen die Abfrageschritte 243 bis 246 für die den Tasten zugeordneten Postbeförderer. Die Waage arbeitet dann nach dem Tarif desjenigen Postbeförderers, für den die Initialisierung erfolgt ist (Zuweisung eines Satzes an Carriern). Im Subschritt 246 wird beispielsweise ein vierter Carrier festgestellt für den die Startadresse des Speichers EEPROM im Subschritt 250 eingestellt wird. Anschließend wird im Subschritt 251 eine CIN ermittelt, entsprechend einer gespeicherten Zuordnung zu einer betätigten Taste, bevor zum Subschritt 241 zwecks weiterer Eingaben zurück verzweigt wird. Andererseits, wenn weder vorher in den Subschritten 243 bis 245 ein Carrier noch im Subschritt 246 ein vierter Carrier festgestellt worden ist, wird zur Auswertung von weiternen Abfragen auf den Subschritt 252 verzweigt. Die Auswertung erfolgt hierbei hinsichtlich der Versandparameter Art, Form und Ziel. Bei der Ernittlung des Portos wird anhand einer eingestellten Tastenkombination der zu übertragene Wahldruck aus dem EEPROM ausgewählt. Ist für die eingestellte Tastenkombination kein geeigneter Wahldruck gespeichert, wird ein Wahldruckmit dem Wert Null übertragen, um kenntlich zu machen, daß kein Wahldruck verfügbar ist.

Anschließend wird im Subschritt 253 eine Abfrage nach Tabelleneintragungen durchgeführt. Wurde dabei ein Tabelleneintrag entsprechend der eingestellten Kombination gefunden, wird zum Subschritt 259 verzweigt, um die Gewichts-klasse zu bestimmen. Im nachfolgenden Subschritt 260 erfolgt die eigentliche Portoberechnung, wobei der Prozessor 27 als Steuereinrichtung zur Berechnung und später Datenübermittlung des Portos und/oder zur Datenübermittlung von Überprüfungsdaten zur Frankiermaschine sowie zur Modusumschaltung durch ein Speichermittel 28 programmiert ist. Entsprechend der Portoberechnung ist dann im Subschritt 261 der Wert im Porto-Akkumulator der CPU 27 zu aktualisieren. Anschließend wird im Subschritt 262 nach weiteren Dateneinträgen gesucht und auf den Subschritt 253 zurück verzweigt. Anderenfalls wenn kein weiterer Tabelleneintrag entsprechend der eingestellten Kombination gefunden wird, wird zum Subschritt 254 verzweigt, um den zwischengespeicherten Wert im Porto-Akkumulator der CPU 27 auszugeben. Im nachfolgenden Subschritt 255 wird eine entsprechende Statusvariable ausgegeben. Der erreichte Status wird im Abfrageschritt 256 abgefragt und dabei so ausgewertet, daß zur Fehlerausgabe im Subschritt 257 verzweigt wird, wenn der Status ungleich Null ist. In diesem Fall erfolgt keine Datenübertragung zur Frankiermaschine sondern einer Zurückverzweigung auf die Eingaberoutine im Subschritt 241. Anderenfalls, bei Status gleich Null, wird zum Subschritt 258 verzweigt um einen Datensatz zusammenzustellen, der zur Frankiermaschine 1 zu übermitteln ist. Hierzu wird auf den Punkt v in der Figur 3 zurückverzweigt, um anschließend im Schritt 222 die serielle Schnittstelle der Frankiermaschine zu selektieren und dann im Schritt 223 die Datenübertragung zur Frankiermaschine 1 zu starten.

Es ist vorgesehen, daß die Waage 2 ein mit einem Prozessor 27 verbundenes I/O-Port 26 sowie eine mit letzterem verbundene Schnittstelleneinrichtung 25 aufweist, welche über ein Verbindungskabel 24 mit der Schnittstelleneinrichtung 22 der Frankiermaschine 1 gekoppelt ist.
Bei dem Verfahren zur Dateneingabe in eine Waage eines Postabfertigungssystems, wobei über eine Schnittstelle die Waage 2 mit der Frankiermaschine 1 verbunden ist, laufen folgende Schritte ab:
- Initialisieren (Schritt 221) der Waage 2 nach dem Einschalten (Schritt 220) der Waage 2,
- Initialisieren (Schritt 121) der Frankiermaschine 1 nach dem Einschalten (Schritt 120) der Frankiermaschine 1,
- Moduswahl für das Postabfertigungssystem,
- Selektieren (Schritt 122 und Schritt 222) jeweils der Schnittstelle der Frankiermaschine 1 und der Waage 2 zur Vorbereitung einer Datenübertragung,
- Datenübertragung zur Frankiermaschine und Quittierung der erfolgten Datenübertragung,
- Umschalten des Modus (Schritte 127 und 227) für die Frankiermaschine 1 und für die Waage 2 in den Aktualisierungsmodus, wenn ein Aktualisierungserfordernis ermittelt wird und
- Zurückschalten (Schritte 127 und 227) in den normalen Betriebsmodus (Schritte 136 und 240), wenn kein Aktualisierungserfordernis mehr besteht.

Das Verfahren ist weiterhin gekennzeichnet, durch eine standortspezifische Bereitstellung einer Liste seitens der Datenzentrale, um eine Eingabe der Postleitzahl in die Waage in einem ersten Subschritt 2211 des Schrittes 221 zum Initialisieren vorzunehmen und durch standortspezifische Bereitstellung von Daten für die Waage aus einem externen Speicher über ein Kommunikationsnetz.
Dabei ist in einer Variante vorgesehen, daß nach nach einem Ortwechsel die Waage von einem Benutzer eingeschaltet und daß die Eingabe der Postleitzahl mittels Waage-Tastatur nach dem Einschalten im Subschritt 2211 zum Schritt 221 der Initialisierung der Waage 2 vorgenommen wird.

In einer anderen Variante ist vorgesehen, daß nach nach einem Ortwechsel die Waage 2 von einem Benutzer eingeschaltet und automatisch die Eingabe der Postleitzahl in die Waage mittels eines Übertragungsmittels 10 oder eines Mobilfunk- bzw. Kommunikationsnetzes nach dem Einschalten über die Frankiermaschine nach Modusumschaltung vorgenommen und dann zum Schritt 221 der Initialisierung der Waage 2 zurück verzweigt wird, um die Initialisierung für den neuen Standort zu vollenden.

Die Waage 2 ist entsprechend programmiert, daß nach dem Einschalten in einem Subschritt zum Schritt Initialisieren der Waage ein Kommunikationserfordernis gebildet und zur Frankiermaschine 1 übermittelt wird. Während einer Datenfernübertragung kann eine Mitteilung des Standortes von der örtlichen Vermittlungsstelle im Rahmen eines Dienstes erfolgen. Eine entsprechende Standortsinformation wird in die Waage 2 durch die Frankiermaschine 1 während des Schrittes 134 übermittelt. Durch die Frankiermaschine gesteuert, werden Daten einerseits für die Waage und andererseits für die Frankiermaschine automatisch bereitgestellt.

Die Anordnung zur Dateneingabe in ein Postabfertigungssystem, das eine Waage und eine Frankiermaschine enthält, basiert auf einem Prozessorsystem 3,5,9,14, 100,101 der Frankiermaschine, um mindestens eine Tabelle aus einem Übertragungsmittel über Empfangsmittel in einen vorbestimmten Schreib/Lese-Speicher der Frankiermaschine zu laden. Erfindungsgemäß ist weiterhin vorgesehen, daß von den vorgenannten Mitteln der Frankiermaschine Steuerdaten für die Übertragung zur Waage im Speichermittel (3 und/oder 9) der Frankiermaschine gespeichert werden und daß der Prozessor 5 programmiert ist, nach Eingang einer von der Waage gesendeten ACK-Mitteilung in die Frankiermaschine und wenn keine weiteren Daten von dem Übertragungsmittel gelesen werden sollen, die Frankiermaschine in den Normalbetrieb umzuschalten bzw. dann, wenn kein Postgut mit einem Portowert zu frankieren ist, in den Standby-Betrieb umzuschalten.

Die Erfindung ist nicht auf die vorliegenden Ausführungsform beschränkt, da offensichtlich weitere andere Anordnungen bzw. Ausführungen des Verfahrens entwickelt bzw. eingesetzt werden können, die vom gleichen Grundgedanken der Erfindung ausgehend, von den anliegenden Ansprüchen umfaßt werden.

## Patentansprüche

1. Verfahren zur Dateneingabe in eine Waage eines Postabfertigungssystems, wobei über eine Schnittstelle die Waage mit einer Frankiermaschine verbunden ist und ein automatisches Verändern des letzten Standes an gespeicherten Dateninhalten in einer Frankiermaschine erfolgt, **gekennzeichnet** durch die Schritte,
- Initialisieren (Schritt 221) der Waage (2) nach dem Einschalten (Schritt 220) der Waage (2),
- Initialisieren (Schritt 121) der Frankiermaschine (1) nach dem Einschalten (Schritt 120) der Frankiermaschine (1),
- Moduswahl für das Postabfertigungssystem,
- Selektieren (Schritte 122 und 222) jeweils der Schnittstelle der Frankiermaschine (1) und der Waage (2) zur Vorbereitung einer Datenübertragung,
- Datenübertragung zur Frankiermaschine und Quittierung der erfolgten Datenübertragung,
- Umschalten des Modus (Schritte 127 und 227) für die Frankiermaschine (1) und für die Waage (2) in den Aktualisierungsmodus, wenn ein Aktualisierungserfordernis ermittelt wird und Aktualisieren, wobei mittels eines externen Speichers eines ersten Übertragungsmittels (10) oder Kommunikationsnetzes Aktualisierungsdaten über die Frankiermaschine zur Waage übertragen werden sowie
- Zurückschalten (Schritte 127 und 227) in den normalen Betriebsmodus (Schritte 136 und 240), wenn kein Aktualisierungserfordernis mehr besteht.

2. Verfahren, nach Anspruch 1, **gekennzeichnet**, durch eine standortspezifische Bereitstellung einer Liste seitens der Datenzentrale, um eine Eingabe der Postleitzahl in die Waage in einem ersten Subschritt (2211) des Schrittes (221) zum Initialisieren vorzunehmen und gekennzeichnet durch standortspezifische Bereitstellung von Daten für die Waage aus einem externen Speicher über ein Kommunikationsnetz.

3. Verfahren, nach Anspruch 2, **dadurch gekennzeichnet**, daß nach einem Ortswechsel die Waage von einem Benutzer eingeschaltet und daß die Eingabe der Postleitzahl mittels Waage-Tastatur nach dem Einschalten im Subschritt (2211) zum Schritt (221) der Initialisierung der Waage (2) vorgenommen wird.

4. Verfahren, nach Anspruch 1, **dadurch gekennzeichnet**, daß nach nach einem Ortwechsel die Waage (2) von einem Benutzer eingeschaltet und automatisch die Eingabe der Postleitzahl in die Waage mittels eines Übertragungsmittels (10) oder eines Mobilfunk- bzw. Kommunikationsnetzes nach dem Einschalten über die Frankiermaschine nach Modusumschaltung vorgenommen und dann zum Schritt (221) der Initialisierung der Waage (2) zurück verzweigt wird, um die Initialisierung für den neuen Standort zu vollenden.

5. Verfahren, nach Anspruch 4, **dadurch gekennzeichnet**, daß nach dem Einschalten in einem Subschritt zum Schritt Initialisieren der Waage (2) ein Kommunikationserfordernis gebildet und übermittelt wird, daß während einer Datenfernübertragung von der örtlichen Vermittlungsstelle im Rahmen eines Dienstes eine Mitteilung des Standortes erfolgt und eine Standortinformation zur Waage durch die Frankiermaschine im Schritt (134) übermittelt wird.

6. Verfahren, nach den Ansprüchen 4 und 5, **dadurch gekennzeichnet,** daß die Rufnummer des rufenden Anschlusses zur gerufenen Datenzentrale übertragen und dort ausgewertet wird, wobei die Datenzentrale eine Datenbank aufweist, in welcher vorgenannte Rufnummernteile (Ortkennzahlen) zugeordnet zu wesentlichen Frankierbildteilen gespeichert vorliegen.

7. Verfahren, nach Anspruch 1, **gekennzeichnet**, durch eine standortspezifische Bereitstellung einer weiteren Liste seitens der Datenzentrale, um eine Eingabe einer dem Namen des Postbeförderes entsprechenden Carrier-ldentifizierungs-Nummer CIN in die Waage in einem zweiten Subschritt (2212) des Schrittes (221) zum Initialisieren vorzunehmen und durch standortspezifische Bereitstellung von Daten für die Waage aus einem externen Speicher über ein Kommunikationsnetz.

8. Verfahren, nach Anspruch 7, **gekennzeichnet**, durch Definition eines Satzes an ausgewählten Postbeförderern im vorgenannten zweiten Subschritt (2212) zum Schritt (221) der vorgenannten Initialisierung mittels Waage-Tastatur, wobei der vorgenannte Satz mindestens einen der für den Standort möglichen Postbeförderer umfaßt, für den die dem aktuellen Tarif entsprechende Portogebührentabelle geladen wird, sobald die Frankiermaschine ein Aktualisierungserfordernis erkannt hat.

9. Verfahren, nach einem der Ansprüche 1 bis 8, **dadurch gekennzeichnet**, daß automatisch die Datenzentrale angewählt wird, falls die Mindestgültigkeitsdauer für die in der Waage gespeicherten Tarife überschritten ist oder falls ein anderer Satz an Postbeförderer definiert wurde.

10. Verfahren, nach einem der Ansprüche 1 bis 9, **dadurch gekennzeichnet**, daß die Datenbank der Datenzentrale für jede Frankiermaschine eine Zuordnung von Maschinennummer, Standort und geladene Befördererkonstellation registriert, wobei die Möglichkeit besteht, durch Eingabe des Standortes bzw. durch Definition eines neuen Satzes an Postbeförderern den bisherigen Standortnamen oder die bisherige Befördererkonstellation zu wechseln.

11. Verfahren, nach Anspruch 1, **gekennzeichnet** durch die Schritte:
- automatisches Überprüfen des letzten Standes an in der Waage gespeicherten Dateninhalten anhand von Überprüfungsdaten in der Frankiermaschine mittels vorher eingespeicherter Informationen über die zukünftig vorzunehmende Änderung und des zugehörigen Gültigkeitsdatums,
- Aktualisieren, wobei nach dem Einschalten bzw. Inkrafttreten einer Änderung mittels eines externen Speichers eines ersten Übertragungsmittels (10) oder Kommunikationsnetzes Aktualisierungsdaten über die Frankiermaschine zur Waage übertragen werden.

12. Verfahren, nach Anspruch 1, **gekennzeichnet** durch die Schritte,
I) Initialisieren von einer Frankiermaschine (1) und einer Waage (2), die über eine Schnittstelle und über ein Verbindungskabel (24) miteinander verbundenen sind, wobei die Waage (2) Mittel (25, 26, 27, 28, 29, 30) zur Portoberechnung, zur Übermittlung des Portobetrages im Normalmodus, zur Datenübermittlung von Überprüfungsdaten zur Frankiermaschine und zur Modusumschaltung aufweist,
II) automatisches Überprüfen des letzten Standes an in der Waage (2) gespeicherten Dateninhalten nach dem Einschalten des Postabfertigungssystems (1, 2) anhand von zur Frankiermaschine übermittelten Überprüfungsdaten mittels in der Frankiermaschine vorher eingespeicherten Informationen über die zukünftig vorzunehmende Änderung und des zugehörigen Gültigkeitdatums,
III) Standortspezifische Bereitstellung von Daten für mindestens die Waage (2) aus einem externen Speicher über ein Kommunikationsnetz, zur Nachladung von mindestens den Aktualisierungsdaten in die Waage (2), IV) Aktualisierung der intern gespeicherten Daten nach Modusumschaltung, wobei in einem Schritt (134) Aktualisierungsdaten über die Frankiermaschine (1) zur Waage (2) übertragen werden.

13. Verfahren, nach Anspruch 12, **gekennzeichnet**, durch eine standortspezifische Bereitstellung von Fensterdaten für den Poststempel bzw. von Zusatzfunktionen für die Frankiermaschine und aktuellen Informationen für eine permanente und/oder temporäre Konfiguration von mindestens der Waage (2) durch ein Kommunikationsnetz, das einen Speicher mit den abrufbaren Datenblöcken zur Nachladung von Zusatzfunktionen- und Informationen in die Frankiermaschine sowie von Aktualisierungsdaten in die Waage enthält.

14. Verfahren, nach Anspruch 1, **gekennzeichnet** durch die Schritte,
I) Initialisieren von einer Frankiermaschine (1) und einer Waage (2), die über eine Schnittstelle und über ein Verbindungskabel (24) miteinander verbundenen sind, wobei die Waage (2) Mittel (25, 26, 27, 28, 29, 30) zur Portoberechnung, zur Übermittlung des Portobetrages im Normalmodus, zur Datenübermittlung von Überprüfungsdaten zur Frankiermaschine und zur Modusumschaltung aufweist,
II) automatisches Überprüfen des letzten Standes an in der Waage (2) gespeicherten Dateninhalten nach dem Einschalten des Postabfertigungssystems (1, 2) anhand von zur Frankiermaschine übermittelten Überprüfungsdaten mittels in der Frankiermaschine vorher eingespeicherten Informationen über die zukünftig vorzunehmende Änderung und des zugehörigen Gültigkeitdatums,
III) Standortspezifische Bereitstellung von Daten für mindestens die Waage (2) aus externen Speichern,
IV) Standortspezifische Initialisierung der Waage und Aktualisierung der intern gespeicherten Daten nach Modusumschaltung, wobei innerhalb eines Zeitfensters nach dem Einschalten aus externen Speichern Aktualisierungsdaten über die Frankiermaschine (1) zur Waage (2) übertragen werden.

15. Verfahren, nach Anspruch 14, **gekennzeichnet**, durch eine standortspezifische Bereitstellung von Fensterdaten für den Poststempel bzw. von Zusatzfunktionen für die Frankiermaschine und aktuellen Informationen für eine permanente und/oder temporäre Konfiguration von mindestens der Waage durch mindestens ein erstes Übertragungsmittel (10) sowie durch eine benutzerindividuelle Einstellung der Frankiermaschine mittels eines zweiten Übertragungsmittels (13).

16. Verfahren, nach einem der Ansprüche 14 bis 15, **dadurch gekennzeichnet**, daß als erste und zweite Übertragungsmittel (10) und (13) eine integrierte Chipkarte ICCA und ICCB, die jeweils einen Speicher mit den abrufbaren Datenblöcken zur Nachladung von Aktualisierungsdaten in die Waage und/oder von Informationen und Zusatzfunktionen in die Frankiermaschine sowie von Aktualisierungsdaten in die Waage aufweisen, verwendet werden.

## Claims

1. A method for data input into the balance of a mail dispatch system, in which the balance is connected with a franking machine by an interface and the latest state of data contents stored in a franking machine is automatically changed,
**characterized by** the following steps:
- initialization (step 221) of the balance (2) after switching the balance (2) on (step 220);
- initialization (step 121) of the franking machine (1) after switching the franking machine (1) on (step 120);
- mode selection for the mail dispatch system;
- selection (steps 122 and 222) of the respective interface of the franking machine (1) and of the balance (2) for preparing a data transmission;
- data transmission to the franking machine and acknowledgement of the performed data transmission;
- switching of the mode (steps 127 and 227) for the franking machine (1) and for the balance (2) over to the updating mode if an updating need has been determined and updating, i.e. an external memory of a first transmission means (10) or communication network transmits updating data over the franking machine to the balance; and switching back (steps 127 and 227) to the normal operating mode (steps 136 and 240), when there is no updating need any more.

2. A method according to Claim 1, **characterized by** a location-specific provision of a list by the data centre in order to carry out the input of the postal code into the balance in a first substep (2211) of step (221) for initialization and characterized by a location-specific provision of data for the balance from an external memory over a communication network.

3. A method according to Claim 2, **characterized in** that, after moving the balance to another location, the balance is switched on by a user and that the postal code is entered, after switching it on, by means of the keyboard of the balance in substep 2211) of step (221) of the initialization of the balance (2).

4. A method according to Claim 1, **characterized in** that, after moving the balance (2) to another location, the balance is switched on by a user and that the postal code is entered automatically into the balance by means of a transmission means (10) or a mobile radio or communication network after switching it on over the franking machine after changing the mode and then is branched back to step (221) of the initialization of the balance (2) in order to complete the initialization for the new location.

5. A method according to Claim 4, **characterized in** that, after the switching-on, a communication need is created and transmitted in a substep of the initialization step of the balance (2), that the location is communicated during a remote data transmission from the local exchange within the framework of a service and a location information is transmitted to the balance by the franking machine in step (134).

6. A method according to Claims 4 and 5, **characterized in** that the subscriber's number of the calling line is transmitted to the data centre called and is analysed there, the data centre having a database in which the above-mentioned parts of subscribers' numbers (area codes) are stored associated with essential franking pattern parts .

7. A method according to Claim 1, **characterized** by a location-specific provision of a further list by the data centre in order to enter into the balance a Carrier Identification Number CIN corresponding to the respective mail carrier in a second substep (2212) of the initialization step (221) and by a location-specific provision of data for the balance from an external memory over a communication network.

8. A method according to Claim 7, **characterized** by the definition of a set of selected mail carriers in the above-mentioned second substep (2212) of step (221) of the above-mentioned initialization by means of the keyboard of the balance, said set comprising at least one of the possible mail carriers of the respective location for which the postage table according to the current postal rates is loaded as soon as the franking machine has recognized an updating need.

9. A method according to one of the Claims 1 to 8, **characterized in** that the data centre is automatically called when the minimum period of validity of the postal rates stored in the balance has been exceeded or if another set of mail carriers has been defined.

10. A method according to one of the Claims 1 to 9, **characterized in** that the database of the data centre registers an allocation of machine number, location and carrier constellation loaded for each franking machine, with the possibility to change the location name or the carrier constellation by entering a location or by defining a new set of mail carriers.

11. A method according to Claim **1, characterized by** the following steps:
- automatic verification of the latest state of data contents stored in the balance by means of check data in the franking machine using previously stored information on the future change to be made and the associated date of validity;
- updating, i.e., after switching-on or after introducing a change, updating data are transmitted by means of an external memory of a first transmission means (10) or communication network over the franking machine to the balance.

12. A method according to Claim 1, **characterized by** the following steps:
I) initialization of a franking machine (1) and a balance (2) that are connected with each other by an interface and a connecting cable (24), balance (2) having means (25, 26, 27, 28, 29, 30) for postage calculation, for transmitting the postage amount in normal mode, for transmitting test data to the franking machine and for mode changeover;
II) automatic verification of the latest version of data contents stored in the balance (2) after switching on the mail dispatch system (1, 2) by means of check data transmitted to the franking machine using previously stored information on the future change to be made and the associated date of validity;
III) location-specific provision of data at least for the balance (2) from an external memory over a communication network for reloading at least the updating data into the balance (2);
IV) updating of the internally stored data after mode changeover, updating data being transmitted in a step (134) over the franking machine (1) to the balance (2).

13. A method according to Claim 12, **characterized by** a location-specific provision of window data for the postmark and/or of additional functions for the franking machine and current information for a permanent and/or temporary configuration of at least the balance (2) by a communication network containing a memory with the retrievable data blocks for reloading of additional functions and information into the franking machine as well as of updating data into the balance.

14. A method according to Claim 1, **characterized by** the following steps:
I) initialization of a franking machine (1) and a balance (2) that are connected with each other by an interface and a connecting cable (24), balance (2) having means (25, 26, 27, 28, 29, 30) for postage calculation, for transmitting the postage amount in normal mode, for transmitting test data to the franking machine and for mode changeover;
II) automatic verification of the latest version of data contents stored in the balance (2) after switching on the mail dispatch system (1, 2) by means of check data transmitted to the franking machine using previously stored information on the change to be made in future and the associated date of validity;
III) location-specific provision of data at least for the balance (2) from external memories;
IV) location-specific initialization of the balance and updating of the internally stored data after a switchover of the mode, updating data being transmitted from external memories over the franking machine (1) to the balance (2) within a window of time after the switching-on.

15. A method according to Claim 14, **characterized by** a location-specific provision of window data for the postmark and/or of additional functions for the franking machine and current information for a permanent and/or temporary configuration of at least the balance by at least a first transmission means (10) as well as by a user-related setting of the franking machine by means of a second transmission means (13).

16. A method according to one of the Claims 14 to 15, **characterized in** that, as the first and second transmission means (10) and (13), there are used integrated chip cards ICCA and ICCB each of which is provided with a memory with the retrievable data blocks for reloading updating data into the balance and/or of information and additional functions into the franking machine as well as of updating data into the balance.

## Revendications

1. Procédé pour l'entrée de données dans une balance dans un système d'expédition postal, la balance étant reliée à une machine à affranchir au moyen d'une interface et s'effectuant une modification automatique du dernier état des contenus des données mémorisées dans une machine à affranchir. Ce procédé est caractérisé par les étapes,
- Initialisation (étape 221) de la balance (2) après la mise en service de la balance (2) (étape 220),
- Initialisation de la machine à affranchir (1) (étape 121) après la mise en service de la machine à affranchir (1) (étape 120),
- Choix du mode de fonctionnement pour le système d'expédition postal,
- Sélection (étapes 122 et 222) des interfaces de la machine à affranchir (1) et de la balance (2) afin de préparer une transmission de données.
- Transmission de données vers la machine à affranchir et acquit de la transmission de données.
- Commutation du mode de fonctionnement (étapes 127 et 227) pour la machine à affranchir (1) et la balance (2) au mode de mise à jour dans les cas où un besoin d'actualisation est détecté. L'actualisation est effectuée en transmettant des données actualisées à la balance par le biais de la machine à affranchir au moyen d'une mémoire externe d'un premier moyen de transfert (10) ou d'un réseau de transmission ainsi que
- Retour (étapes 127 et 227) au mode de fonctionnement normal (étapes 136 et 240) dans les cas où ne subsistent plus de besoins d'actualisation.

2. Procédé conforme à la revendication 1, caractérisé par la mise à disposition spécifique à l'emplacement d'une liste par la centrale de données, ceci afin de procéder à une introduction du code postal dans la balance au cours d'une première sous-étape (2211) de l'étape (221) pour l'initialisation. Procédé caractérisé par une mise à disposition spécifique à l'emplacement de données pour la balance par une mémoire externe au moyen d'un réseau de transmission.

3. Procédé conforme à la revendication 2, caractérisé par le fait qu'après un changement d'emplacement, la balance est mise en service par un utilisateur et que l'introduction du code postal s'effectue au moyen du clavier de la balance après la mise en service lors de la sous-étape (2211) pour passer à l'étape (221) de l'initialisation de la balance (2).

4. Procédé conforme à la revendication 1, caractérisé par le fait qu'après un changement d'emplacement, la balance (2) est mise en service par un utilisateur et que l'introduction automatique du code postal dans la balance s'effectue à l'aide d'un moyen de transfert (10) ou d'un réseau de communication ou d'un service radiotéléphonique mobile après la mise en service de la machine à affranchir après la commutation du mode de fonctionnement. Ensuite, celui-ci est connecté à l'étape (221) de l'initialisation de la balance (2) afin de compléter l'initialisation au nouvel emplacement.

5. Procédé conforme à la revendication 4, caractérisé par le fait qu'après la mise en service, en passant par une sous-étape pour atteindre l'étape de l'initialisation de la balance (2), se créé une condition préalable de communication et que celle-ci est transmise. Dans le cadre d'un service et durant une transmission de données du central téléphonique local, ce procédé se caractérise également par le fait que s'effectue une communication de l'emplacement et une information concernant l'emplacement est transmise à la balance par la machine à affranchir au cours de l'étape (134).

6. Procédé conforme aux revendication 4 et 5, caractérisé par le fait que les numéros de téléphone de l'appareil en question sont transmis à la centrale de données et que ceux-ci y sont analysés, la centrale de données comportant une banque de données qui présente les numéros de téléphone cités ci-dessus (indicatifs téléphoniques), attribués aux sections d'image d'affranchissement mémorisées.

7. Procédé conforme à la revendication 1, caractérisé par une mise à disposition spécifique à l'emplacement d'une liste supplémentaire par la centrale de données, afin de procéder à l'introduction d'un numéro d'identification pour l'agent véhiculaire CIN correspondant au nom du distributeur postal dans une deuxième sous-étape (2212) de l'étape (221) et par une mise à disposition spécifique à l'emplacement de données pour la balance provenant d'une mémoire externe au moyen d'un réseau de communication.

8. Procédé conforme à la revendication 7, caractérisé par la définition d'un lot de distributeurs postaux sélectionnés au cours de la deuxième sous-étape (2212) précitée de l'étape (221) de l'initialisation citée ci-dessus et effectuée au moyen du clavier de la balance, le lot précité comprenant au moins un distributeur de courrier potentiel pour l'emplacement en question, et pour lequel seront enregistrés les tarifs actuels conformément à la liste des prix pour les frais de port et ce dès que la machine à affranchir aura reconnu un besoin d'actualisation.

9. Procédé conforme à l'une des revendications 1 à 8, caractérisé par le fait que la centrale de données est choisie automatiquement dans le cas où la durée minimale de validité des tarifs mémorisés par la balance est dépassée ou dans le cas où un autre lot de distributeurs postaux a été défini.

10. Procédé conforme à l'une des revendications 1 à 9, caractérisé par le fait que la banque de données de la centrale de données enregistre pour chaque machine à affranchir une attribution du numéro de la machine ainsi que l'emplacement et la constellation des distributeurs mémorisés, pendant qu'il existe la possibilité de modifier le nom de l'emplacement ou de la constellation de distributeurs en vigueur par l'introduction de l'emplacement ou par la définition d'un nouveau lot de distributeurs postaux.

11. Procédé conforme à la revendication 1, caractérisé par les étapes:
- contrôle automatique du dernier état des données mémorisées dans la balance par des données de contrôle dans la machine à affranchir au moyen d'informations mémorisées d'avance concernant la modification à effectuer ultérieurement et la date de validité correspondante,
- actualisation, les dates actualisées étant transmises à la balance par la machine à affranchir après la mise en service ou l'entrée en vigueur d'une modification d'un premier moyen de transfert (10) au moyen d'une mémoire externe ou d'un réseau de communication.

12. Procédé conforme à la revendication 1, caractérisé par les étapes,
I) initialisation d'une machine à affranchir (1) et d'une balance (2) qui sont reliées au moyen d'une interface et d'un câble de connexion (24), la balance (2) comportant des éléments (25,26,27,28,29,30) permettant de calculer les frais de port, de transmettre le montant des frais de port en mode de fonctionnement normal, de transmettre des données de contrôle pour la machine à affranchir et pour la commutation du mode de fonctionnement,
II) vérification automatique du dernier état des contenus des données mémorisées dans la balance (2) après la mise en service du système d'expédition postal (1, 2) au moyen de données de contrôle transmises à la machine à affranchir grâce à des informations concernant la modification à effectuer ultérieurement ainsi que la date de validité correspondante, informations qui ont été auparavant mémorisées dans la machine à affranchir,
III) mise à dispositions spécifique à l'emplacement de données provenant d'une mémoire externe d'un réseau de communication et ce au moins pour la balance (2), pour au minimum recharger les données actualisées de la balance (2),
IV) actualisation des données mémorisées dans la mémoire interne après la commutation du mode de fonctionnement, des données actualisées étant transmises en une seule étape (134) à la balance (2) en passant par la machine à affranchir (1).

13. Procédé conforme à la revendication 12, caractérisé par une mise à disposition spécifique à l'emplacement de données de visualisation pour le cachet postal ou pour des fonctions supplémentaires pour la machine à affranchir et des informations actuelles pour une configuration permanente et / ou temporaire au minimum de la balance (2), et ce au moyen d'un réseau de communication qui comporte une mémoire avec des blocs de données qu'il est possible d'appeler séparément afin de recharger des fonctions supplémentaires et des informations dans la machine à affranchir ainsi que des données actualisées dans la balance.

14. Procédé conforme à la revendication 1, caractérisé par les étapes,
I) initialisation d'une machine à affranchir (1) et d'une balance (2) qui sont reliées par une interface et un câble de connexion (24), la balance (2) comportant des éléments (25,26,27,28,29,30) pour calculer les frais de port, pour transmettre le montant des frais de port en mode de fonctionnement normal, pour transmettre des données de contrôle à la machine à affranchir et pour la commutation du mode de fonctionnement,
II) vérification automatique du dernier état des contenus des données mémorisées dans la balance (2) après la mise en service du système d'expédition postal (1,2) et ce au moyen de données de contrôle transmise à la machine à affranchir grâce à des informations mémorisées auparavant dans la machine à affranchir, informations concernant la modification à effectuer ultérieurement et la date de validité correspondante,
III) mise à disposition spécifique à l'emplacement de données provenant de mémoires externes pour au minimum la balance (2),
IV) initialisation spécifique à l'emplacement de la balance et actualisation des données internes mémorisées après la commutation du mode de fonctionnement, des données actualisées provenant des mémoires externes étant transmises à la balance (2) par la machine à affranchir (1) durant un laps de temps donné suivant la mise en service.

15. Procédé conforme à la revendication 14, caractérisé par une mise à disposition spécifique à l'emplacement de données de visualisation pour le cachet postal et pour des fonctions supplémentaires pour la machine à affranchir et des informations actuelles pour une configuration actuelle et / ou temporaire au minimum de la balance par au moins un premier élément de transmission (10) ainsi que par un réglage individuel pour l'utilisateur de la machine à affranchir, et ce au moyen d'un deuxième élément de transmission (13).

16. Procédé conforme à l'une des revendications 14 et 15, caractérisé par le fait qu'on emploie comme premier et deuxième moyen de transmission (10) et (13) une carte à puce ICCA et ICCB intégrée. Ces cartes comportent respectivement une mémoire avec les blocs de données qu'il est possible d'appeler séparément pour recharger les données actualisées dans la balance et / ou des informations et des fonctions supplémentaires dans la machine à affranchir ainsi que des données actualisées dans la balance.
